# EUROPÄISCHE PATENTSCHRIFT

(11) **EP 2 645 146 B1**
(45) Veröffentlichungstag und Bekanntmachung des Hinweises auf die Patenterteilung: **23.07.2014**
(21) Anmeldenummer: 13001524.1
(22) Anmeldetag: 25.03.2013
(51) Int. Cl.: G02B 21/14, G01N 1/28, G02B 21/34

(54) **Lichtmikroskop und Verfahren zur Bildaufnahme mit einem Lichtmikroskop**
Light microscope and method of recording images with a light microscope
Microscope optique et procédé d'enregistrement d'images à l'aide d'un microscope optique

(30) Priorität: 28.03.2012 DE 102012006350; 06.03.2013 DE 102013003900
(43) Veröffentlichungstag der Anmeldung: 02.10.2013
(73) Patentinhaber: Carl Zeiss Microscopy GmbH, 07745 Jena (DE)
(72) Erfinder: Steinmeyer, Ralf, 30165 Hannover (DE); Schön, Peter, 37075 Göttingen (DE); Langhorst, Matthias, 82205 Gilching OT Argelsried (DE); Bendlin, Cornelia, 37085 Göttingen (DE)
(74) Vertreter: Schiffer, Axel Martin

(56) Entgegenhaltungen:
- WO-A1-03/057922
- US-A- 4 342 905
- SHALIN B. MEHTA; COLIN J.R. SHEPPARD: "Quantitative phasegradient imaging at high resolution with asymmetric illumination-based differential phase contrast", OPTICS LETTERS, Bd. 34, Nr. 13, 2009, Seiten 1924-1926, XP002697476,

## Beschreibung

Die vorliegende Erfindung bezieht sich in einem ersten Aspekt auf ein Verfahren zur Bildaufnahme mit einem Lichtmikroskop nach dem Oberbegriff des Anspruchs 1.

In einem zweiten Gesichtspunkt betrifft die Erfindung ein Lichtmikroskop nach dem Oberbegriff des Anspruchs 14.

WO 03/057922 offenbart ein Verfahren und ein Lichtmikroskop gemäß dem Stand der Technik.

Das erfindungsgemäße Verfahren und das erfindungsgemäße Lichtmikroskop sind insbesondere zur Untersuchung von Proben geeignet, welche die Phase von Licht, das die Probe durchläuft, ändert.

Beeinflusst die Probe die Amplitude des durchlaufenden Lichts kaum, so ist ein Durchlicht-Hellfeldbild der Probe sehr kontrastarm. Daher ist es zweckmäßig, die Phaseninformation des transmittierten Lichts sichtbar zu machen. Bei gewöhnlichen Detektoren, wie beispielsweise Kameras oder dem menschlichen Auge, werden nur Lichtintensitäten und keine Phaseninformationen gemessen. Damit die Phaseninformation mit einem gewöhnlichen Lichtdetektor registriert werden kann, muss zunächst die durch die Probe hervorgerufene Phasenänderung in eine Amplitudenänderung des Lichts umgewandelt werden.

Hierzu sind verschiedene Verfahren bekannt, beispielsweise das Zernike-Phasenkontrastverfahren, der Hoffmann-Modulationskontrast und der Differenzial-Interferenzkontrast (Differential Interference Contrast, DIC). Bei all diesen Verfahren müssen zwischen der Probenebene und der Bildebene optische Elemente in den Strahlengang gebracht werden, um den gewünschten Kontrast zu erreichen. So werden beim Phasenkontrastverfahren und beim Hoffmann-Modulationskontrast eine Ring- oder stabförmige Blende oder andere optische Elemente mit vergleichsweise geringem Transmissionsgrad in Einschuböffnungen an der Detektionsapertur eingebracht.

Beim DIC-Verfahren befindet sich zwischen der Proben- und der Bildebene ein doppelbrechendes Prisma, an welchem zwangsläufig auch unerwünschte Reflexionen auftreten. Daher haben bei allen genannten Verfahren die angeführten optischen Elemente einen Intensitätsverlust zur Folge.

Zwar werden Durchlichtbilder oftmals mit sehr hoher Lichtintensität aufgenommen, so dass der beschriebene Intensitätsverlust verhältnismäßig gering sein kann. Allerdings kann es wünschenswert sein, an der Probe auch Fluoreszenzmessungen durchzuführen. Fluoreszenzlicht kann von der Probe selbst oder von hinzugegebenen fluoreszierenden Farbstoffen emittiert werden. Mit einem Lichtdetektor werden nur die fluoreszierenden Bereiche aufgenommen, während der Rest der Probe unsichtbar bleibt. Deshalb kann es wünschenswert sein, das Fluoreszenzbild mit einem Durchlichtbild zu kombinieren, auf dem weitere Umrisse der Probe sichtbar sind. Bei der Probe kann es sich beispielsweise um Zellen, Gewebeschnitte oder andere biologische Proben handeln. Mit dem Durchlichtbild können dann beispielsweise Umrisse der Zellen und einige innere Strukturen dargestellt werden, während das Fluoreszenzbild zusätzliche Informationen liefert. Daher sollen Fluoreszenz- und Durchlichtmessungen mit demselben Lichtmikroskop durchgeführt werden können. Weil aber die Intensität des emittierten Fluoreszenzlichts oftmals gering ist, führt der zuvor beschriebene Intensitätsverlust an optischen Elementen zu einer deutlichen Verschlechterung des Fluoreszenzbildes.

Deshalb ist ein Messverfahren angestrebt, bei dem keine zusätzlichen optischen Elemente sowohl zwischen der Beleuchtungslichtquelle und der Probe als auch zwischen der Probe und der Bildebene in den Strahlengang eingebracht werden müssen, um eine Phasenänderung von Licht in eine Amplitudenänderung des Lichts zu überführen. Ein solches Verfahren wurde von Mehta und Sheppard vorgeschlagen und beschrieben in: Shalin B. Mehta and Colin J.R. Sheppard, "Quantitative phasegradient imaging at high resolution with asymmetric illumination-based differential phase contrast," Optics Letters, vol. 34, no. 13 (2009), pp. 1924-1926.

Bei diesem gattungsgemäßen Verfahren zur Bildaufnahme mit einem Lichtmikroskop ist vorgesehen, dass an einer Probenhalterung des Lichtmikroskops ein Probengefäß mit einer Probe angebracht wird, dass Beleuchtungslicht auf die Probe geleitet wird, dass eine Blende zum Beschneiden des Beleuchtungslichts in einen Strahlengang des Beleuchtungslichts gebracht wird, dass eine erste Blendeneinstellung vorgenommen wird, bei welcher die Blende einen ersten Querschnittsflächenanteil des Beleuchtungslichts abdeckt, dass mit der ersten Blendeneinstellung ein erstes Bild der Probe aufgenommen wird, dass eine zweite Blendeneinstellung vorgenommen wird, bei welcher die Blende einen zweiten Querschnittsflächenanteil des Beleuchtungslichts abdeckt, der von dem ersten Querschnittsflächenanteil verschieden ist, dass mit der zweiten Blendeneinstellung ein zweites Bild der Probe aufgenommen wird und dass das erste Bild und das zweite Bild zum Erstellen eines Kontrastbildes miteinander verrechnet werden.

Ein gattungsgemäßes Lichtmikroskop weist auf: eine Probenhalterung zum Halten eines Probengefäßes mit einer Probe, optische Mittel zum Leiten von Beleuchtungslicht auf die Probe, eine Blende, die zum Beschneiden des Beleuchtungslichts in einem Strahlengang des Beleuchtungslichts anordenbar ist, elektronische Steuerungsmittel zum Einstellen einer ersten Blendeneinstellung, bei welcher die Blende einen ersten Querschnittsflächenanteil des Beleuchtungslichts abdeckt, und Bildaufnahmemittel zum Aufnehmen eines erstes Bild der Probe mit der ersten Blendeneinstellung. Hierbei sind die elektronischen Steuerungsmittel zum Einstellen einer zweiten Blendeneinstellung eingerichtet, bei welcher die Blende einen zweiten Querschnittsflächenanteil des Beleuchtungslichts abdeckt, der von dem ersten Querschnittsflächenanteil verschieden ist, wobei mit den Bildaufnahmemitteln ein zweites Bild der Probe mit der zweiten Blendeneinstellung aufnehmbar ist und wobei die elektronischen Steuerungsmittel dazu eingerichtet sind, das erste Bild und das zweite Bild zum Erstellen eines Kontrastbildes miteinander zu verrechnen.

Die Blende kann beispielsweise in der Beleuchtungsapertur eingebracht werden, also in einer Pupillenebene, in der eine Lichtintensitätsverteilung zu einer Lichtintensitätsverteilung in der Probenebene durch eine Fourier-Transformation bestimmt ist. Bei der Aufnahme des ersten und des zweiten Bildes kann die Blende jeweils eine Hälfte der Beleuchtungsapertur abdecken. Das Kontrastbild kann beispielsweise durch Differenzbildung zwischen den Helligkeitswerten der Bildpixel des ersten Bildes und den Helligkeitswerten der Bildpixel des zweiten Bildes erfolgen. Zur Normierung kann zusätzlich eine Division durch die Summe der Helligkeitswerte der entsprechenden Pixel im ersten und zweiten Bild durchgeführt werden. Wird mit der Blende in der ersten und der zweiten Blendeneinstellung jeweils eine Halbpupille abgedeckt, so entspricht das Kontrastbild dem Phasengradienten senkrecht zur Richtung der Grenze zwischen den beiden Halbpupillen.

Dieses Messverfahren ist besonders geeignet für Proben, die zwischen einem Objektträger und einem Deckglas eingeschlossen sind. Zusätzliche Schwierigkeiten können auftreten, wenn Proben, insbesondere Zellkulturen oder andere biologische Proben, in Gefäßen mit Töpfchenform untersucht werden, beispielsweise in Mikrotiterplatten. Solche Mikrotiterplatten weisen als Probengefäße eine Vielzahl von Probentöpfchen auf, die jeweils voneinander durch eine Wand getrennt sind. Durch die Wand des Probengefäßes wird ein Teil des Beleuchtungslichts ausgeblendet. Sind in der ersten und der zweiten Blendeneinstellung die Anteile des Beleuchtungslichts, die durch die Wand des Probengefäßes ausgeblendet werden, unterschiedlich, so bewirkt dies eine schlechtere Qualität des Kontrastbildes.

Bei dem oben genannten Artikel von Mehta und Sheppard soll die Blende per Hand im Strahlengang positioniert werden. Werden aber Probengefäße mit seitlichen Wänden verwendet, so wird das Beleuchtungslicht durch die Wände asymmetrisch bezüglich der optischen Achse beschnitten. Als Folge hat ein Benutzer kaum Anhaltspunkte, an welcher Stelle die Blende per Hand zu positionieren ist. Daher ist ein Einstellen der Blende per Hand unkomfortabel und zeitaufwändig.

Als eine **Aufgabe** der Erfindung kann angesehen werden, ein Verfahren zur Bildaufnahme mit einem Lichtmikroskop anzugeben, bei dem eine besonders gute Bildqualität möglichst unabhängig vom verwendeten Probengefäß erreicht wird. Außerdem soll ein Lichtmikroskop geschaffen werden, das eine Bildaufnahme mit besonders guter Qualität möglichst unabhängig von dem verwendeten Probengefäß erlaubt.

Diese Aufgabe wird durch das Verfahren mit den Merkmalen des Anspruchs 1 und durch das Lichtmikroskop mit den Merkmalen des Anspruchs 14 gelöst.

Vorteilhafte Varianten des erfindungsgemäßen Lichtmikroskops und bevorzugte Ausgestaltungen des erfindungsgemäßen Verfahrens sind Gegenstand der abhängigen Ansprüche und werden außerdem in der folgenden Beschreibung, insbesondere im Zusammenhang mit den Figuren, beschrieben.

Bei dem Verfahren der oben genannten Art ist erfindungsgemäß vorgesehen, dass zu einem eingegrenzten Querschnittsbereich des Beleuchtungslichts, der durch eine Wand des Probehgefäßes definiert ist, als erste und als zweite Blendeneinstellung solche Blendeneinstellungen ermittelt und eingestellt werden, bei denen die Blende gleich große Anteile des eingegrenzten Querschnittsbereichs abdeckt, wobei das Beleuchtungslicht in einem Querschnitt quer zu einer optischen Achse des Lichtmikroskops durch die Wand des Probengefäßes auf den eingegrenzten Querschnittsbereich beschnitten wird.

Bei dem Lichtmikroskop der oben genannten Art sind erfindungsgemäß die elektronischen Steuerungsmittel dazu eingerichtet, zu einem eingegrenzten Querschnittsbereich des Beleuchtungslichts, der durch eine Wand des Probengefäßes definiert ist, als erste und als zweite Blendeneinstellung solche Blendeneinstellungen zu ermitteln und einzustellen, bei denen die Blende gleichgroße Anteile des eingegrenzten Querschnittsbereichs abdeckt; wobei ein Beschnitt des Beleuchtungslichts auf den eingegrenzten Querschnittsbereich in einem Querschnitt quer zu einer optischen Achse des Lichtmikroskops durch die Wand des Probengefäßes entstehen kann.

Als Kerngedanke der Erfindung kann angesehen werden, dass die erste und zweite Blendeneinstellung abhängig von der Lage des eingegrenzten Querschnittsbereichs und somit abhängig von der Position des Probengefäßes relativ zur optischen Achse eingestellt werden. Dass die Blende in der ersten und der zweiten Blendeneinstellung gleich große Anteile des eingegrenzten Querschnittsbereichs abdeckt,wirkt sich vorteilhaft auf die Qualität des Kontrastbildes aus, welches über eine Differenzbildung zwischen dem ersten und dem zweiten Bild berechnet werden kann. Die abgedeckten Anteile des eingegrenzten Querschnittbereichs können dann als gleich groß angesehen werden, wenn sie sich um höchstens 10 %, bevorzugt höchstens 5 % und besonders bevorzugt höchstens 2 %, voneinander unterscheiden.

Als Wand des Probengefäßes sollen die seitlichen Begrenzungen des Probengefäßes, die etwa parallel zur optischen Achse verlaufen, verstanden werden. Ein Boden des Probengefäßes, der etwa senkrecht zur optischen Achse liegt, ist hingegen nicht als Wand des Probengefäßes zu verstehen.

Der eingegrenzte Querschnittsbereich des Beleuchtungslichts kann in einer Ebene quer, insbesondere senkrecht, zur optischen Achse definiert sein. Entlang der optischen Achse kann dieser Querschnitt an der Position, an welcher sich die Blende befindet, definiert sein.

Bei einer bevorzugten Ausgestaltung wird die Blende zwischen einer Beleuchtungslichtquelle und der Probe in den Strahlengang gebracht. Als Blendenpositionen können beispielsweise eine Beleuchtungspupille, also eine Aperturebene eines Kondensors oder anderer optischer Mittel zum Fokussieren von Beleuchtungslicht auf die Probe, genutzt werden. Alternativ kann die Blende auch an einer anderen Position zwischen einer Beleuchtungslichtquelle des Lichtmikroskops und dem Kondensor angeordnet sein, beispielsweise benachbart zur Beleuchtungslichtquelle oder zu einer Streuscheibe, die an die Beleuchtungslichtquelle angrenzt.

Aufgrund eines Phasengradienten in der Probe entstehen verschiedene Bildhelligkeiten bei unterschiedlichen Positionen der Blende, obwohl bei diesen Positionen möglichst gleich große Anteile eines Querschnittbereichs des Beleuchtungslichts abgedeckt werden. Dies kann folgendermaßen veranschaulicht werden: Durch die Blende, die hier im Strahlengang vor der Probe angeordnet ist, fällt Beleuchtungslicht schräg auf die Probe. Ein Phasengradient in der Probe beeinflusst den räumlichen Verlauf des Beleuchtungslichts. Wird dieser Verlauf nach außen verschoben, so wird ein geringerer Anteil des Beleuchtungslichts vom Objektiv aufgenommen. Dadurch sinkt die Bildhelligkeit. Wird hingegen durch den Phasengradienten das Beleuchtungslicht nach innen geleitet, also zur optischen Achse hin, gelangt mehr Beleuchtungslicht in das Objektiv. Die Bildhelligkeit steigt dadurch. Abhängig vom Phasengradienten in der Probe unterscheiden sich somit die Helligkeitswerte in den beiden aufgenommenen Bildern, für welche die Blende gleich große aber unterschiedliche Bereiche abgedeckt.

Bei dieser Ausführung sollte die Beleuchtungsapertur größer oder gleich der Detektionsapertur sein. Unter der Beleuchtungsapertur kann die numerische Apertur verstanden werden, mit welcher Beleuchtungslicht in die Probenebene geleitet wird. Entsprechend kann die Detektionsapertur die numerische Apertur darstellen, mit der Beleuchtungslicht aus der Probenebene mit einem Objektiv aufgenommen wird. Ist die Beleuchtungsapertur mindestens so groß wie die Detektionsapertur, so bewirkt ein Phasengradient, dass bei einer Verschiebung des Beleuchtungslichts nach außen auch tatsächlich ein Anteil des Beleuchtungslichts nicht mehr vom Objektiv aufgenommen wird. Wäre hingegen die Beleuchtungsapertur kleiner als die Detektionsapertur, so würde Beleuchtungslicht noch immer vollständig vom Objektiv aufgenommen werden, wenn es aufgrund des Phasengradienten nach außen verschoben wird. In diesem Fall würde der Phasengradient eine Bildhelligkeit kaum beeinflussen.

Grundsätzlich kann die Beleuchtungsapertur durch den Kondensor bestimmt sein. Durch ein Probengefäß kann jedoch das Beleuchtungslicht beschnitten werden, womit die Beleuchtungsapertur verringert wird. Bei einer Mikrotiterplatte mit 96 Töpfchen kann beispielsweise die Beleuchtungsapertur auf NA = 0,3 verringert sein. Bei 384 Töpfchen kann die Beleuchtungsapertur sogar auf NA = 0,15 reduziert sein.

Bei Probenuntersuchungen ist daher häufig die Detektionsapertur größer als die Beleuchtungsapertur. In diesen Fällen kann auch eine verstellbare Zusatzblende in der Objektivpupille oder einer dazu konjugierten Ebene im Detektionsstrahlengang vorgesehen sein. Diese schränkt die Detektionsapertur ein, so dass diese kleiner oder gleich der Beleuchtungsapertur ist. Damit ist jedoch eine beträchtliche Verringerung der nachweisbaren Lichtmenge verbunden.

Dieser Nachteil wird bei einer anderen, besonders bevorzugten Ausführung vermieden. Bei dieser wird die Blende zwischen der Probe und Bildaufnahmemitteln in den Strahlengang gebracht. Eine Blende, die zum Erzeugen einer schrägen Beleuchtung vor der Probe angeordnet ist, ist hier nicht erforderlich. Das Vorzeichen des Phasengradienten in der Probe bestimmt die Richtung, in der Beleuchtungslicht in der Blendenebene verschoben ist. Abhängig vom Phasengradienten wird daher ein Anteil des Beleuchtungslichts entweder gerade noch die Blende passieren oder von dieser blockiert werden. Daher ist auch hier die Bildhelligkeit abhängig vom Phasengradienten.

Ein Großteil des nachgewiesenen Lichts wird jedoch unabhängig davon nachgewiesen, ob eine Verschiebung aufgrund eines Phasengradienten in der Probe erfolgt. Dieser Anteil kann weitgehend kompensiert werden, indem mit der zweiten Blendeneinstellung ein weiteres Bild aufgenommen wird, dessen Helligkeitswerte von denen des ersten Bildes abgezogen werden. Das resultierende Kontrastbild enthält dadurch nur geringe Anteile von Licht, das unabhängig vom Phasengradienten in beiden Bildern nachgewiesen wird. Die durch den Phasengradienten bedingte Heiligkeitsänderung ist hingegen in beiden Bildern unterschiedlich hoch, so dass diese Differenz durch die Verrechnung der Bilder stärker zur Geltung kommt. Dabei ist die Größe des Phasengradienten in einer Richtung senkrecht zu einer Blendenkante der Blende maßgebend.

Dieses Verfahren kann auch bei Objektiven mit niedriger numerischer Apertur genutzt werden. In diesem Fall kann eine verstellbare Zusatzblende im Strahlengang vor der Probenebene vorgesehen sein. Mit dieser kann die Beleuchtungsapertur verringert werden, so dass sie kleiner als die Detektionsapertur ist.

Ein besonders guter Bildkontrast kann erreicht werden, wenn mit der ersten Blendeneinstellung eine Hälfte des eingegrenzten Querschnittsbereichs abgedeckt wird und mit der zweiten Blendeneinstellung die andere Hälfte des eingegrenzten Querschnittsbereichs abgedeckt wird. Diese Einstellungen können mit einer Blende erfolgen, die genau eine lineare Blendenkante hat. Die Blendenkante kann dabei so positioniert werden, dass sie die optische Achse berührt. Von der ersten zur zweiten Blendeneinstellung kann die Blende sodann um 180° um die optische Achse gedreht werden.

Um die erste und zweite Blendeneinstellung festzulegen, ist bei einer bevorzugten Variante des erfindungsgemäßen Verfahrens vorgesehen, dass ein Mittelpunkt des eingegrenzten Querschnittsbereichs des Beleuchtungslichts bestimmt wird, dass als Symmetriegerade eine Gerade festgelegt wird, welche durch den Mittelpunkt verläuft, und dass als erste und zweite Blendeneinstellung solche Blendeneinstellungen eingestellt werden, bei denen die Fläche, die von der Blende in der ersten Blendeneinstellung abgedeckt wird, und die Fläche, die von der Blende in der zweiten Blendeneinstellung abgedeckt wird, symmetrisch zur Symmetriegeraden liegen. Grundsätzlich kann als Symmetriegerade jede Gerade verwendet werden, die durch den Mittelpunkt verläuft. Bei Blenden, die schaltbare Flüssigkristallbereiche umfassen, kann beispielsweise eine beliebige Gerade, die durch den Mittelpunkt verläuft, ausgewählt werden.

Die Blendeneinstellungen können sich aber auch in einem Drehwinkel einer Blendenkante der Blende um eine Drehachse voneinander unterscheiden. In diesem Fall wird bevorzugt als Symmetriegerade eine Gerade festgelegt, welche den Mittelpunkt und die Drehachse schneidet.

Insbesondere wenn die Drehachse auf oder in der Nähe der optischen Achse liegt, kann eine Symmetriegerade festgelegt werden, die durch den Mittelpunkt des eingegrenzten Querschnittsbereichs und durch die optische Achse verläuft. Indem bei dieser Variante die Symmetriegerade immer die optische Achse schneidet, kann die Blende in der ersten und der zweiten Blendeneinstellung die optische Achse mit einer Blendenkante berühren. Hierdurch ist es vorteilhafterweise möglich, dass eine Bewegung der Blende von der ersten zur zweiten Blendeneinstellung unabhängig von der jeweiligen Lage des eingegrenzten Querschnittsbereichs durch Drehung der Blende um die optische Achse erfolgen kann.

Abhängig von einer Justage der Blende kann eine Drehachse jedoch beabstandet von der optischen Achse sein. Auch können optische Komponenten im Strahlengang die Lage der optischen Achse beeinflussen.

Bei einer bevorzugten Verfahrensvariante wird daher in einer Kalibriermessung eine Position der Drehachse ermittelt. Die ermittelte Position kann sodann genutzt werden, um geeignete Drehwinkel der Blende zu bestimmen, die für die verschiedenen Blendeneinstellungen genutzt werden.

Die Lage der optischen Achse kann sich durch schaltbare Komponenten im Strahlengang auch unabsichtlich ändern. Beispielsweise führt ein Objektivwechsel oftmals zu einer Verschiebung der optischen Achse. Daher wird eine Kalibriermessung bevorzugt nach jedem Objektivwechsel durchgeführt.

Für die Kalibriermessung kann beispielsweise mindestens ein Pupillenbild aufgenommen und ausgewertet werden. In dem Pupillenbild wird die Blende, die in einer Pupillenebene angeordnet ist, scharf abgebildet.

Vorzugsweise werden in der Kalibriermessung mindestens zwei Pupillenbilder aufgenommen, bei denen die Blendenkante in verschiedene Drehwinkel um die Drehachse gebracht wird. Aus den Ausrichtungen der Blendenkante in den verschiedenen Pupillenbildern wird sodann die Position der Drehachse ermittelt.

Bei einer Bestimmung der Blendeneinstellungen über den Mittelpunkt des eingegrenzten Querschnittsbereichs kann eine gute Qualität des Kontrastbildes für beliebige Wandformen des Probengefäßes erreicht werden, insbesondere für Probengefäße mit einem kreisförmigen oder rechteckigen Querschnitt.

Eine Alternative zur Bestimmung der Blendeneinstellungen über den Mittelpunkt des eingegrenzten Querschnittsbereichs ist bei einer weiteren Ausführung des erfindungsgemäßen Verfahrens vorgesehen. Hierbei wird als eine Symmetriegerade eine Verbindungsgerade von der optischen Achse zu einem nächstliegenden Wandbereich des Probengefäßes bestimmt, wobei der nächstliegende Wandbereich derjenige Teil der Wand des Probengefäßes ist, der sich am nächsten zu der optischen Achse befindet, und als erste und zweite Blendeneinstellung werden solche Blendeneinstellungen eingestellt, bei denen die Fläche, die von der Blende in der ersten Blendeneinstellung abgedeckt wird, und die Fläche, die von der Blende in der zweiten Blendeneinstellung abgedeckt wird, symmetrisch zur Symmetriegeraden liegen.

Als Position der optischen Achse kann in aufgenommenen Bildern näherungsweise der Mittelpunkt des jeweiligen Bildes angenommen werden. Die Symmetrie bezüglich der Symmetriegeraden soll als spiegelbildlich zur Symmetriegeraden verstanden werden. Bei einer Blende mit einer linearen Blendenkante, die insbesondere die optische Achse berührt, sind die erste und zweite Blendenposition demnach um 180° zueinander gedreht. Bevorzugt liegt dabei die lineare Blendenkante gerade auf der Symmetriegeraden. Hat hingegen die Blende die Form eines Kreissegments oder Kuchenstücks, dessen Spitze an der Drehachse oder der optischen Achse einen Winkel a bildet, so folgt aus der Achssymmetrie bezüglich der Symmetriegeraden, dass die erste und zweite Blendenposition zueinander um einen von 180° verschiedenen Winkel gedreht sind.

Diese Ausführungsform ist insbesondere für Probengefäße mit einer runden oder kreisförmigen Wand in einem Querschnitt quer zur optischen Achse geeignet. Bei solch einem runden Probengefäß wird durch die Verbindungsgerade von der optischen Achse zu dem nächstliegenden Wandbereich der Querschnittsbereich des Beleuchtungslichts, der durch das Probengefäß eingegrenzt wird, gerade halbiert.

Die Bestimmung des nächstliegenden Wandbereichs oder des Mittelpunkts des eingegrenzten Querschnittsbereichs erfolgt bei einer bevorzugten Verfahrensvariante mittels einer Übersichtsmessung. Hierbei ist vorgesehen, dass in einer Übersichtsmessung ein Übersichtsbild der Probe aufgenommen wird, dass in dem Übersichtsbild mittels Bildverarbeitungsmitteln die Position einer Wand des Probengefäßes ermittelt wird und dass aus der ermittelten Position der Wand der nächstliegende Wandbereich zur optischen Achse bestimmt wird und/oder dass mit der ermittelten Position der Wand der Mittelpunkt des eingegrenzten Querschnittsbereichs bestimmt wird.

Damit eine Messung mit möglichst viel Beleuchtungslicht durchgeführt wird, befindet sich bei der Übersichtsmessung die Blende bevorzugt nicht im Strahlengang des Beleuchtungslichts. Grundsätzlich kann sich aber auch die Blende im Strahlengang befinden. Die Übersichtsmessung kann mit einer kleineren Vergrößerung erfolgen als die Messungen zur Aufnahme des ersten und des zweiten Bildes, mit denen das Kontrastbild erstellt wird. Insbesondere kann die Vergrößerung bei der Übersichtsmessung klein genug sein, dass immer ein Wandbereich des Probengefäßes aufgenommen wird. Ein Wandbereich wird also trotz verschiedener Relativposition des Probengefäßes zur optischen Achse stets aufgenommen, solange die optische Achse durch das Probengefäß verläuft. Alternativ kann die Übersichtsmessung auch mit derselben Auflösung aufgenommen werden wie das erste und das zweite Bild.

Bei einer weiteren Ausführungsform des erfindungsgemäßen Verfahrens ist vorgesehen, dass zur Bestimmung der ersten und zweiten Blendeneinstellung in einer Übersichtsmessung ein Übersichtsbild der Probe aufgenommen wird, dass in dem Übersichtsbild mittels Bildverarbeitungsmitteln die Position einer Wand des Probengefäßes ermittelt wird und dass aus der ermittelten Position der Wand der nächstliegende Wandbereich zum Mittelpunkt des Übersichtsbilds bestimmt wird, dass eine Senkrechte auf eine Tangentialebene des nächstliegenden Wandbereichs bestimmt wird und dass die Senkrechte als Symmetriegerade festgelegt wird, wobei als erste und zweite Blendeneinstellung solche Blendeneinstellungen eingestellt werden, bei denen die Fläche, die von der Blende in der ersten Blendeneinstellung abgedeckt wird, und die Fläche, die von der Blende in der zweiten Blendeneinstellung abgedeckt wird, symmetrisch zur Symmetriegeraden liegen. Hat das Probengefäß einen kreisförmigen Querschnitt, so wird mit der Symmetriegeraden der eingegrenzte Querschnittsbereich, der durch die Wand des Probengefäßes definiert ist, stets halbiert. Indem die beiden Blendeneinstellungen bezüglich der Symmetriegeraden spiegelbildlich zueinander festgelegt werden, deckt die Blende vorteilhafterweise in den beiden Blendeneinstellungen gleich große Anteile des eingegrenzten Querschnittsbereichs ab.

Eine von dieser Ausführungsform abgewandelte Variante des erfindungsgemäßen Verfahrens berücksichtigt den Umstand, dass in der Regel die Wand des Probengefäßes aus der Probenebene herausragt. Als Folge wird die Wand in der Bildebene des Lichtmikroskops nicht scharf abgebildet, sondern wirkt dort als Schatten auf dem Bild der Probe. Aus der Position des Schattens kann auf die Lage der Wand geschlossen werden. Diese Verfahrensvariante ist dadurch gekennzeichnet, dass zur Bestimmung der ersten und zweiten Blendeneinstellung ein Bild der Probe aufgenommen wird, wobei sich die Blende nicht im Strahlengang des Beleuchtungslichts befindet, dass in dem Bild mittels Bildverarbeitungsmitteln ein durch die Wand des Probengefäßes abgeschatteter Bereich erkannt wird und dass die Wand als Trennlinie zwischen dem abgeschatteten Bereich und einem nicht abgeschatteten Bereich des Bildes identifiziert wird. Bei der Festlegung der Trennlinie können auch eingelernte Werte genutzt werden, bei denen die Position eines abgeschatteten Bereichs verknüpft wurde zu einer Wandposition, die in einer Übersichtsmessung bestimmt wurde.

Grundsätzlich kann der Bereich, der von der Blende in der ersten Blendeneinstellung abgedeckt wird, mit dem Bereich, der von der Blende in der zweiten Blendeneinstellung abgedeckt wird, überlappen. Für einen hohen Bildkontrast ist es aber zweckmäßig, dass sich die abgedeckten Bereiche nicht oder nur kaum überlappen. Bei einer weiteren Variante des erfindungsgemäßen Verfahrens werden hierzu als erste und zweite Blendeneinstellung solche Blendeneinstellungen vorgenommen, bei denen eine von der Blende abgedeckte Fläche jeweils bis an die Symmetriegerade angrenzt.

Bei den beschriebenen Varianten kann eine Bestimmung der beiden Blendeneinstellungen dadurch erfolgen, dass mindestens ein Testbild, vorzugsweise ohne Probe, aufgenommen wird und mit Bildverarbeitungsmitteln in dem Testbild eine Lage der Wand des Probengefäßes ermittelt wird.

Alternativ können die beiden gewünschten Blendeneinstellungen auch bestimmt werden, indem mit verschiedenen Blendeneinstellungen eine Reihe an Testbildern aufgenommen wird und anschließend an Hand eines Bewertungskriteriums aus den vorgenommenen Blendeneinstellungen zwei geeignete ausgewählt werden. Hierbei ist vorgesehen, dass zur Bestimmung der ersten und zweiten Blendeneinstellung die Blende zunächst in den Strahlengang des Beleuchtungslichts gebracht wird, insbesondere so weit, dass eine Blendenkante der Blende die optische Achse berührt. Sodann wird die Blende gedreht, insbesondere um die optische Achse. Bei verschiedenen Drehpositionen der Blende werden Testbilder der Probe aufgenommen. Jeweils ein Paar von Testbildern, zu welchem die zugehörigen Drehpositionen der Blende um 180° zueinander gedreht sind, werden hinsichtlich eines Bewertungskriteriums miteinander verrechnet. Mit dem Bewertungskriterium wird eines der Paare an Testbildern ausgewählt und die zugehörigen beiden Blendeneinstellungen werden als erste und zweite Blendeneinstellung eingestellt.

Dieser Drehversatz von 180° zwischen der ersten und der zweiten Blendenposition gilt für eine Blende, die genau eine lineare Blendenkante hat, welche vollständig durch den Querschnitt des Beleuchtungslichts verläuft. Im Fall einer Blende, die lediglich ein Kreissegment mit dem Winkel a an der optischen Achse freilässt, ist der Drehversatz zwischen den beiden Blendenpositionen nicht 180°, sondern der Winkel a.

Für das Bewertungskriterium kann zunächst aus dem Paar der Testbilder ein Kontrastbild berechnet werden, beispielsweise durch Differenzbildung der Helligkeiten einander entsprechender Bildpunkte der Testbilder und anschließende Division durch die Summe der Helligkeiten der entsprechenden Bildpunkte. Sodann kann zu jedem der so bestimmten Kontrastbilder ein Kontrast berechnet und/oder eine Kantenzählung durchgeführt werden. Je mehr Details auf dem Kontrastbild sichtbar sind, desto höher sind in der Regel Kontrast und Kantenzahl. Schließlich wird als Bewertungskriterium dasjenige Paar der Testbilder ausgewählt, dessen Kontrast und/oder Kantenzahl am größten ist.

Zum Verringern der Zeit, die zur Bestimmung der ersten und zweiten Blendeneinstellung benötigt wird, können die Testbilder mit einer geringeren Belichtungszeit aufgenommen werden als das erste und das zweite Bild, mit denen das Kontrastbild erzeugt wird.

Weiterhin kann die erforderliche Zeit reduziert werden, wenn die Bestimmung der beiden Blendeneinstellungen iterativ erfolgt. Hierbei wird zunächst die Reihe an Testbildern mit Blendeneinstellungen durchgeführt, die in einem verhältnismäßig großen Drehwinkel zueinander liegen, beispielsweise 30°. Hieraus werden mit dem Bewertungskriterium die beiden bestgeeigneten Paare von Blendeneinstellungen ausgewählt. Anschließend werden Drehpositionen zwischen diesen beiden Paaren in kleineren Drehwinkeln eingestellt, beispielsweise in 5°-Abstand, und an Hand hierzu aufgenommener Testbilder wird mit dem Bewertungskriterium schließlich das bestgeeignete Paar an Blendenstellungen als erste und zweite Blendeneinstellung eingestellt.

In einer weiteren Alternative können die beiden Blendeneinstellungen auch eingelernt werden. Hierzu können Positioniermittel für die Probenhalterung vorhanden sein. In einem Einlernvorgang stellen elektronische Steuerungsmittel über die Positioniermittel verschiedene Positionen der Probenhalterung und eines davon gehaltenen Probengefäßes ein. Dabei befindet sich im Probengefäß keine Probe oder zumindest keine einen Phasenkontrast erzeugende Probe. Zu jeder Position des Probengefäßes wird ein Bild aufgenommen und automatisch oder durch einen Benutzer eine Wand des Probengefäßes ermittelt. Sodann wird als Symmetriegerade eine Senkrechte zu einer Tangentialebene an die ermittelte Wand festgelegt. Der Einlernvorgang ist abgeschlossen, wenn zu jeder gewünschten Position eine Symmetriegerade gespeichert ist. Im Messbetrieb kann zu einer eingestellten Position des Probengefäßes die gespeicherte Symmetriegerade genutzt werden, um zwei Blendeneinstellungen vorzunehmen, die symmetrisch zur Symmetriegeraden liegen. Es kann auch vorgesehen sein, dass anstelle einer Symmetriegeraden im Einlernvorgang direkt zwei Blendeneinstellungen zur jeweiligen Position der Probenhalterung und des davon gehaltenen Probengefäßes hinterlegt und im Messbetrieb geladen werden. Bei einer weiteren Verfahrensalternative wird als Blende eine mechanische Blende mit mindestens einer Blendenkante verwendet. Zum Einstellen der ersten und der zweiten Blendeneinstellung kann vorgesehen sein, dass die Blende in den Strahlengang des Beleuchtungslichts gebracht wird, insbesondere soweit, dass ihre Blendenkante die optische Achse berührt, und dass die Blende von der ersten Blendeneinstellung zu der zweiten Blendeneinstellung gedreht wird, insbesondere um die optische Achse. Eine motorische Steuerung der Blende kann hiermit vorteilhafterweise besonders einfach ausgeführt sein, da zum Wechseln zwischen den beiden Blendeneinstellungen lediglich eine Drehung der Blende erforderlich ist.

Es kann erfindungsgemäß auch vorgesehen sein, dass die Blende durchgängig gedreht wird, dass für eine erste Bildaufnahme ein Kamerasensor des Lichtmikroskops über mehrere Umdrehungen der Blende belichtet wird, dass für die erste Bildaufnahme ein Lichtimpuls als Beleuchtungslicht immer dann gesendet wird, wenn sich die Blende an einer ersten Drehposition als erste Blendeneinstellung befindet, und ansonsten kein Beleuchtungslicht ausgesendet wird. Für eine zweite Bildaufnahme wird der Kamerasensor des Lichtmikroskops über mehrere Umdrehungen der Blende belichtet, wobei für die zweite Bildaufnahme ein Lichtimpuls als Beleuchtungslicht immer dann gesendet wird, wenn sich die Blende an einer zweiten Drehposition als zweite Blendeneinstellung befindet, und ansonsten kein Beleuchtungslicht ausgesendet wird. Somit wird eine stroboskopische Beleuchtung erzeugt. Für die Aufnahme des ersten Bildes kann vorgesehen sein, dass so viele Lichtimpulse gesendet werden, bis eine vorgegebene Bildhelligkeit mit dem Kamerasensor festgestellt wird. Anschließend wird das zweite Bild mit derselben Anzahl an Lichtimpulsen aufgenommen. Für ein besonders gutes Signal-zu-Rausch-Verhältnis kann das zweite Bild ebenfalls mit so vielen Lichtimpulsen aufgenommen werden, bis eine vorgegebene Bildhelligkeit erreicht wird, wobei für die anschließende Verrechnung des ersten und des zweiten Bildes die unterschiedliche Anzahl ausgesendeter Lichtimpulse berücksichtigt wird.

An Stelle der stroboskopischen Beleuchtung kann auch eine längere Beleuchtungszeit vorgesehen sein, während der durchgängig Beleuchtungslicht ausgesendet wird und sich die Blende dreht. Diese Verfahrensvariante ist besonders bevorzugt, wenn die Blende eine Kreissegmentform hat, wobei eine Kreissegmentöffnung der Blende mit einer Spitze wird so angeordnet wird, dass sie die optische Achse des Lichtmikrosköps berührt.

Bei dieser Variante ist vorgesehen, dass die Blende durchgängig gedreht wird, dass als erste Blendeneinstellung die Blende einen ersten Drehbereich überstreicht, und dass als zweite Blendeneinstellung die Blende einen zweiten Drehbereich überstreicht. Hier stellen die erste und zweite Blendeneinstellung keine festen Positionen, sondern eine Bewegung der Blende dar. Die Anteile des eingegrenzten Querschnittsbereichs, die in der ersten oder zweiten Blendeneinstellung abgedeckt werden, sind hier diejenigen Anteile, die bei Überstreichen des ersten oder zweiten Drehbereichs abgedeckt werden. Bevorzugt kann die Kreissegmentöffnung einen Winkel von kleiner als 180° aufweisen. Damit eine verhältnismäßig große Lichtmenge auf den Kamerasensor trifft, kann die Kreissegmentöffnung aber auch einen Öffnungswinkel von größer als 180° haben.

Damit bei der Aufnahme des ersten und des zweiten Bildes möglichst gegenüberliegende Bereiche des eingegrenzten Querschnittsbereichs abgedeckt werden, können der erste Drehbereich und der zweite Drehbereich jeweils als Drehwinkel von 180° um die optische Achse definiert sein. Um hierbei die Ausdehnung der Blende zu berücksichtigen, kann der Drehwinkel von 180° auch um den Winkel der Kreissegmentöffnung verringert sein. Ein guter Kontrast kann ferner erreicht werden, wenn als Beginn und/oder Ende der beiden Drehbereiche jeweils eine Blendenposition festgelegt wird, an der eine Blendenkante die Symmetriegerade berührt, welche die optische Achse und den nächstliegenden Wandbereich des Probengefäßes verbindet.

Für eine gute Bildqualität ist eine geeignete Belichtungszeit der Bildaufnahmemittel des Lichtmikroskops bedeutsam. Die Bildaufnahmemittel können beispielsweise ein räumlich auflösender Kamerachip oder -sensor sein. Bei einer bevorzugten Ausführungsvariante des erfindungsgemäßen Verfahrens ist vorgesehen, dass mit der ersten und/oder zweiten Blendeneinstellung ein Testbild aufgenommen wird, dass eine Bildhelligkeit des aufgenommenen Testbildes oder der aufgenommenen Testbilder ermittelt wird, dass mit der ermittelten Bildhelligkeit eine Belichtungszeit eines Kamerachips des Lichtmikroskops so festgelegt wird, dass eine gewünschte Bildhelligkeit mit der ersten und/oder zweiten Blendeneinstellung erreicht wird, und dass die Drehgeschwindigkeit der Blende so gewählt wird, dass die Zeit, die die Blende zum Überstreichen des ersten und des zweiten Drehbereichs benötigt, jeweils gleich der festgelegten Belichtungszeit ist. Hier wird also die Drehgeschwindigkeit der Blende an eine zuvor bestimmte Belichtungszeit des Kamerachips angepasst.

Alternativ oder zusätzlich kann zum Einstellen einer gewünschten Bildhelligkeit auch die Lichtintensität einer Beleuchtungslichtquelle des Lichtmikroskops verändert werden. Hierbei wird ebenfalls mit der ersten und/oder zweiten Blendeneinstellung jeweils ein Bild aufgenommen und es wird eine Bildhelligkeit der aufgenommenen Bilder ermittelt. Abhängig von dieser Bildhelligkeit wird die Lichtintensität so eingestellt, dass die gewünschte Bildhelligkeit mit der ersten und/oder zweiten Blendeneinstellung erreicht wird. Anschließend werden mit den beiden Blendeneinstellungen das erste und das zweite Bild zum Erzeugen des Kontrastbildes aufgenommen.

Das erfindungsgemäße Lichtmikroskop kann insbesondere zur Durchführung des erfindungsgemäßen Verfahrens sowie der beschriebenen Verfahrensvarianten eingerichtet sein.

Bei dem erfindungsgemäßen Lichtmikroskop wird ein Kontrastbild durch Verstellen einer Blende im Beleuchtungsstrahlengang erzeugt, also einer Blende zwischen der Beleuchtungslichtquelle und der Probenebene. Damit Lichtverluste möglichst gering sind, kann vorgesehen sein, dass das Lichtmikroskop zwischen der Probenhalterung und den Bildaufnahmemitteln frei von optischen Elementen zur Phasenkontrasterzeugung ist. Insbesondere kann vorgesehen sein, dass hier keine doppelbrechenden Prismen und keine Polarisationsfilter zur Phasenkontrasterzeugung vorhanden sind.

Alternativ kann die Blende zwischen der Probenebene und Bildaufnahmemitteln angeordnet sein. Beispielsweise kann die Blende im Strahlengang hinter dem Objektiv in einer Ebene angeordnet sein, die optisch konjugiert zu einer Pupillenebene des Objektivs ist. In diesen Fällen sind bevorzugt keine Blenden zwischen der Beleuchtungslichtquelle und der Probenebene vorhanden.

Zweckmäßigerweise kann das Lichtmikroskop ein Objektiv zum Leiten von Beleuchtungslicht, das von der Probe kommt, zu den Bildaufnahmemitteln aufweisen. Dabei ist die Blende bevorzugt in einer Ebene angeordnet, die zu einer Aperturebene des Objektivs konjugiert ist. Die Blende wird also bevorzugt in einer Pupillenebene angeordnet, in welcher eine Beleuchtungslichtintensität über eine Fourier-Transformation mit der Beleuchtungsintensität in der Probenebene zusammenhängt.

Die optischen Mittel zum Leiten des Beleuchtungslichts auf die Probe können einen Kondensor umfassen. Bei einer Anordnung im Beleuchtungsstrahlengang ist die Blende bevorzugt auf einer Seite des Kondensors angeordnet, die der Probenhalterung abgewandt ist, insbesondere in einer Aperturebene des Kondensors. Alternativ kann die Blende neben einer Beleuchtungslichtquelle des Lichtmikroskops oder neben einer Streuscheibe der Beleuchtungslichtquelle angeordnet sein. Mit diesen Anordnungen der Blende kann vorteilhafterweise erreicht werden, dass ein durch die Probe verursachter Helligkeitsunterschied zwischen dem ersten und dem zweiten Bild besonders groß ist.

Zum Verstellen der Blende ist bevorzugt ein Blendenmotor vorhanden. Die elektronischen Steuerungsmittel sind dann dazu eingerichtet, die Blende mittels des Blendenmotors von der ersten Blendeneinstellung zu der zweiten Blendeneinstellung zu bewegen. Insbesondere kann die Blende gedreht werden. Ihre Drehachse kann in der optischen Achse liegen oder von dieser verschieden sein. Die elektronischen Steuerungsmittel können auch dazu eingerichtet sein, die Blende in den Beleuchtungsstrahlengang hinein bis zu der ersten Blendeneinstellung zu bewegen.

Bei einer weiteren Ausführungsform des erfindungsgemäßen Lichtmikroskops ist die Blende zweigliedrig mit einem ersten und einem zweiten Blendenflügel gebildet. Dabei können die beiden Blendenflügel gemeinsam um die optische Achse drehbar und unabhängig voneinander in Radialrichtung zur optischen Achse bewegbar sein. Die elektronischen Steuerungsmittel können dazu eingerichtet sein, zum Einstellen der ersten Blendeneinstellung den ersten Blendenflügel in den Strahlengang des Beleuchtungslichts hinein und den zweiten Blendenflügel aus dem Strahlengang heraus zu bewegen. Zum Einstellen der zweiten Blendeneinstellung wird der zweite Blendenflügel in den Strahlengang des Beleuchtungslichts hinein bewegt und der erste Blendenflügel wird aus dem Strahlengang heraus bewegt.

Die Blende kann auch als Blendengruppe mit mehreren Einzelblenden ausgeführt sein. Für die verschiedenen Blendeneinstellungen kann dann jeweils eine andere Einzelblende in den Strahlengang eingebracht werden. Bei einer mechanisch robusten Ausführung sind die Einzelblenden der Blendengruppe starr miteinander verbunden. Beispielsweise kann die Blendengruppe als Rad mit ringförmig angeordneten Aussparungen gestaltet sein. In den Aussparungen sind die Einzelblenden aufgenommen. Durch Drehen der Blendengruppe kann sodann eine gewünschte Einzelblende in den Strahlengang gebracht werden.

Jede Einzelblende kann eine Blendenkante aufweisen. Die Einzelblenden sind innerhalb der starren Blendengruppe so angeordnet, dass ihre Blendenkanten in verschiedenen Winkeln oder Drehwinkeln ausgerichtet sind, wenn sich die jeweilige Einzelblende im Strahlengang des Beleuchtungslichts befindet.

Die Blendengruppe kann auch einen oder mehrere freie Durchlässe aufweisen, an denen sich keine Einzelblenden befinden. Eine oder mehrere der Aussparungen sind also nicht mit Einzelblenden belegt. Durch einen solchen Durchlass wird der Strahlengang nicht beschnitten, was beispielsweise für Fluoreszenzmessungen vorteilhaft sein kann. Zudem ist bei dieser Ausführung ein einziger Motor zum Drehen der Blendengruppe ausreichend, um die gewünschten Blendeneinstellungen sowie eine Einstellung ohne Blende für Fluoreszenzmessungen vorzunehmen.

Wird hingegen beispielsweise eine einzige Blende mit genau einem Blendenflügel verwendet, sind bevorzugt zwei Motoren vorhanden. Mit dem ersten Motor kann die Blende in den Strahlengang ein- und ausgefahren werden. Mit dem zweiten Motor kann die Blende zum Vornehmen verschiedener Blendeneinstellungen gedreht werden. Dazu kann die Blende insbesondere in einer Ringaufnahme drehbar gelagert sein.

Die Blende kann auch im Spektralbereich des Beleuchtungslichts lichtundurchlässig und in einem davon verschiedenen Spektralbereich lichtdurchlässig sein. Dabei kann die Blende als Farbfilter oder Dichroit gebildet sein. Vorteilhafterweise kann so erreicht werden, dass Fluoreszenzlicht auch den von der Blende abgedeckten Bereich passieren kann. Damit ist es nicht erforderlich, für Fluoreszenzmessungen die Blende aus dem Strahlengang zu entfernen. Bevorzugt blockiert die Blende Licht in einem Wellenlängenbereich, in dem ohnehin typischerweise kein Fluoreszenzlicht abgegeben wird. Dies betrifft beispielsweise Intrarotlicht und/oder Licht im tiefroten Spektralbereich.

Für eine zeitsparende Bildaufnahme kann im Strahlengang hinter der Blende ein wellenlängenabhängiger Strahlteiler vorhanden sein. Dieser leitet Beleuchtungslicht zu einer Kamera und Fluoreszenzlicht zu einer anderen Kamera.

Ein aufgenommenes Fluoreszenzbild kann auch mit dem Kontrastbild, das aus den beiden Bildern mit verschiedenen Blendeneinstellungen berechnet wird, zu einem Bild überlagert werden. Dadurch müssen nicht verschiedene Bilder desselben Probenbereichs separat betrachtet oder ausgewertet werden.

Bei der vorgenannten Ausführung, bei der die Blende im Spektralbereich von Fluoreszenzlicht lichtdurchlässig ist, kann die Aufnahme des Fluoreszenzbildes unabhängig von der momentanen Blendeneinstellung erfolgen.

Wird hingegen eine Blende verwendet, die auch Fluoreszenzlicht blockiert, wird diese aus dem Strahlengang entfernt, bevor eine Fluoreszenzbild aufgenommen wird. Die Aufnahme des Fluoreszenzbildes kann zwischen der Aufnahme der beiden Bilder mit unterschiedlichen Blendeneinstellungen erfolgen. So kann die Zeitdauer der Aufnahme des Fluoreszenzbildes genutzt werden, um eine Drehbewegung der Blende durchzuführen, bevor sie für die zweite Bildaufnahme wieder in den Strahlengang eingefahren wird.

Anstelle einer mechanischen Blende oder zusätzlich zu einer mechanischen Blende kann die Blende auch ein zweidimensionales Array aus Flüssigkristallelementen umfassen, die zwischen Transparenz und Opazität schaltbar sind. Hier sind die elektronischen Steuerungsmittel dazu eingerichtet, zum Einstellen der ersten und der zweiten Blendeneinstellung jeweils bestimmte Flüssigkristallelemente auf Opazität zu schalten. Vorteilhafterweise ist hier eine Bewegung der Blende nicht erforderlich und eine Bildaufnahme kann in besonders kurzer Zeit erfolgen. Der durch die Blende abgedeckte Bereich wird hier durch die Flüssigkristallelemente bestimmt, die auf Opazität geschaltet sind. Die Flüssigkristallelemente können in einer rechteckförmigen Matrix angeordnet sein, womit beliebige Blendenformen angenähert werden können. Alternativ können die Flüssigkristallelemente die Form von Kreissegmenten haben, deren Mittelpunkt mit der optischen Achse des Lichtmikroskops zusammenfällt. Hierdurch können Bilder mit hohem Kontrast bereits mit einer relativ geringen Anzahl an Flüssigkristallelementen erreicht werden. Es kann auch vorgesehen sein, dass ein innerer Bereich der Blende über ein Array aus Flüssigkristallelementen gebildet ist, während ein äußerer Bereich der Blende durch eine mechanische Kreisblende erzeugt wird.

Bei einer weiteren Ausführung umfasst die Blende mehrere Spiegel, die zwischen mindestens zwei verschiedenen Ausrichtungen schaltbar sind. In nur einer der Ausrichtungen wird Beleuchtungslicht in Richtung der Bildaufnahmemittel weitergeleitet. Die Spiegel sind unabhängig voneinander verstellbar, so dass mit ihnen eine beliebige Blendenform einstellbar ist. Insbesondere kann die Blende als Mikrospiegelarray (DMD, englisch: digital mirror device) ausgeführt sein.

Prinzipiell ist es ausreichend, zwei Blendeneinstellungen zu ermitteln, bei denen die lichtblockierenden Bereiche der Blende symmetrisch zu der oben beschriebenen Symmetriegeraden liegen. So können zwei Bilder aufgenommen werden, die zu einem Kontrastbild verrechnet werden. In diesem hängt ein Helligkeitskontrast maßgeblich vom Phasengradienten in der Probe in einer bestimmten Richtung ab. Um auch Kontrastbilder zu erzeugen, bei denen der Helligkeitskontrast maßgeblich vom Phasengradienten in einer anderen Richtung abhängt, können auch weitere Bilder zu Blendeneinstellungen aufgenommen werden, die symmetrisch zu einer anderen Symmetriegeraden liegen. Bevorzugt werden zwei Symmetriegeraden gewählt, die senkrecht zueinander stehen und beide durch den Mittelpunkt des eingegrenzten Querschnittbereichs verlaufen. Die mindestens zwei in dieser Weise erzeugten Kontrastbilder können schließlich auch zu einem einzigen Bild verrechnet oder überlagert werden.

Für eine hohe Bildauflösung soll die Beleuchtungsapertur möglichst groß sein. Das heißt, das Objektiv soll von einem Probenpunkt ausgehendes Licht mit einem möglichst großen Öffnungswinkel weiterleiten, wobei dieser Öffnungswinkel mit dem Beleuchtungslicht möglichst weit ausgeleuchtet werden soll. Dies kann erfindungsgemäß insbesondere erreicht werden, wenn in der ersten und der zweiten Blendeneinstellung jeweils eine Halbpupille abgedeckt wird, also jeweils eine Hälfte des durch die Wand des Probengefäßes eingegrenzten Querschnittsbereichs. Ein Bild mit gutem Kontrast kann aber auch noch erreicht werden, wenn statt Halbpupillen kleinere Kreissegmente durch die Blende freigelassen werden. Dabei ist erforderlich, dass sich die beiden Kreissegmente, die in der ersten und der zweiten Blendeneinstellung freigelassen werden, in der Aperturblendenebene gegenüberstehen, das heißt achssymmetrisch zur oben beschriebenen Symmetriegeraden liegen.

Auch eine Blende, deren freigelassenes Kreissegment einen Winkel von größer als 180° bildet, kann erfindungsgemäß eingesetzt werden. Vorteilhafterweise wird hiermit mehr Beleuchtungslicht auf die Bildaufnahmemittel geleitet, womit kürzere Belichtungszeiten möglich sind. Hier enthalten die beiden zu verrechnenden Bilder jedoch gleiche Anteile, die zu keiner Kontrasterhöhung des berechneten Kontrastbildes führen.

Prinzipiell sind beliebige Blendenformen, beispielsweise Ringe oder Halbringe, möglich. Wichtig ist hierbei, dass die Bereiche, die in der ersten und zweiten Blendeneinstellung abgedeckt werden, symmetrisch zur oben erläuterten Symmetriegeraden liegen.

Das erfindungsgemäße Lichtmikroskop ist im Gegensatz zu herkömmlichen gattungsgemäßen Lichtmikroskopen insbesondere dazu geeignet, auch Probenbereiche nahe den Wänden des Probengefäßes zu untersuchen. Bei einer bevorzugten Ausführung des erfindungsgemäßen Lichtmikroskops werden verschiedene Bereiche der Probe nacheinander automatisch gescannt. Hierzu ist vorgesehen, dass Positioniermittel zum Verschieben der Probenhalterung vorhanden sind, dass die elektronischen Steuerungsmittel dazu eingerichtet sind, zur Untersuchung verschiedener Bereiche der Probe im Probengefäß mittels der Positioniermittel unterschiedliche Positionen der Probenhalterung einzustellen und dass die elektronischen Steuerungsmittel dazu eingerichtet sind, für jede eingestellte Position der Probenhalterung eine erste und eine zweite Blendeneinstellung zu ermitteln und für jede eingestellte Position der Probenhalterung ein Kontrastbild zu erzeugen.

Die in dieser Weise gewonnenen Kontrastbilder zu den verschiedenen Bereichen der Probe können anschließend zu einem Gesamtbild zusammengesetzt werden. Die Probenhalterung, die verschoben wird, kann auch an einem Probentisch gebildet sein, wobei die Positioniermittel dazu eingerichtet sein können, den Probentisch und damit die Probenhalterung zu verstellen.

Weitere Merkmale und Vorteile der Erfindung werden nachstehend mit Bezug auf die beigefügten schematischen Figuren beschrieben. Hierin zeigen:
- Fig. 1: eine schematische Darstellung eines Ausführungsbeispiels eines erfindungsgemäßen Lichtmikroskops, bei dem eine erste Blendeneinstellung vorgenommen ist;
- Fig. 2: eine schematische Darstellung des erfindungsgemäßen Lichtmikroskops aus Fig. 1, wobei eine zweite Blendeneinstellung vorgenommen ist;
- Fig. 3: eine schematische Darstellung von wesentlichen Teilen eines Lichtmikroskops, wobei durch das Probengefäß das Beleuchtungslicht beschnitten wird;
- Fig. 4: eine schematische Darstellung eines Querschnitts des Beleuchtungslichts zu der Situation aus Fig. 3;
- Fig. 5: eine schematische Darstellung von wesentlichen Teilen eines Lichtmikroskops, wobei durch das Probengefäß das Beleuchtungslicht asymmetrisch beschnitten wird;
- Fig. 6: eine schematische Darstellung eines Querschnitts des Beleuchtungslichts zu der Situation aus Fig. 4;
- Fig. 7: eine schematische Darstellung von wesentlichen Teilen eines Lichtmikroskops, wobei durch das Probengefäß das Beleuchtungslicht asymmetrisch beschnitten wird und eine Blende in eine erste Blendeneinstellung geführt ist;
- Fig. 8: eine schematische Darstellung eines Querschnitts des Beleuchtungslichts zu der Situation aus Fig. 7;
- Fig. 9: eine schematische Darstellung von wesentlichen Teilen eines Lichtmikroskops, wobei durch das Probengefäß das Beleuchtungslicht asymmetrisch beschnitten wird und eine Blende in eine zweite Blendeneinstellung geführt ist;
- Fig. 10: eine schematische Darstellung eines Querschnitts des Beleuchtungslichts zu der Situation aus Fig. 9;
- Fig. 11: eine schematische Darstellung von wesentlichen Teilen eines Lichtmikroskops, bei dem eine Blende in eine erste Blendeneinstellung geführt ist und bei dem durch das Probengefäß das Beleuchtungslicht asymmetrisch beschnitten wird, wobei eine Oberflächenkrümmung der Probenflüssigkeit berücksichtigt wird;
- Fig. 12: eine schematische Darstellung eines Querschnitts des Beleuchtungslichts zu der Situation aus Fig. 11;
- Fig. 13: eine schematische Darstellung von wesentlichen Teilen eines Lichtmikroskops, bei dem eine Blende in eine zweite Blendeneinstellung geführt ist und bei dem durch das Probengefäß das Beleuchtungslicht asymmetrisch beschnitten wird, wobei eine Oberflächenkrümmung der Probenflüssigkeit berücksichtigt ist;
- Fig. 14: eine schematische Darstellung eines Querschnitts des Beleuchtungslichts zu der Situation aus Fig. 13;
- Fig. 15 und 16: jeweils eine schematische Darstellung eines Querschnitts von Beleuchtungslicht, das durch eine Blende beschnitten ist, die gemäß dem erfindungsgemäßen Verfahren angeordnet ist;
- Fig. 17: eine weitere schematische Darstellung eines Querschnitts des Beleuchtungslichts zur Erläuterung der Bestimmung der ersten und zweiten Blendeneinstellung;
- Fig. 18: eine schematische Darstellung eines weiteren Ausführungsbeispiels eines erfindungsgemäßen Lichtmikroskops, bei dem eine kreissegmentförmige Blende eingesetzt wird;
- Fig. 19: eine schematische Darstellung einer Blende eines erfindungsgemäßen Lichtmikroskops, die mit Flüssigkristallelementen gebildet ist;
- Fig. 20: eine schematische Darstellung eines Ausführungsbeispiels eines erfindungsgemäßen Lichtmikroskops, bei dem sich die Blende im Detektionsstrahlengang in einer ersten Blendeneinstellung befindet;
- Fig. 21: eine schematische Darstellung des erfindungsgemäßen Lichtmikroskops aus Fig. 20, wobei eine zweite Blendeneinstellung vorgenommen ist;
- Fig. 22: eine schematische Darstellung von wesentlichen Teilen eines Lichtmikroskops, wobei durch das Probengefäß das Beleuchtungslicht asymmetrisch beschnitten wird und sich eine Blende in einer bestimmten Blendeneinstellung befindet;
- Fig. 23: eine schematische Darstellung der Teile eines Lichtmikroskops aus Fig. 22, wobei sich die Blende in einer anderen Blendeneinstellung befindet;
- Fig. 24: eines schematische Darstellung eines weiteren Ausführungsbeispiels eines erfindungsgemäßen Lichtmikroskops, bei dem die Blende als Blendengruppe gestaltet ist, und
- Fig. 25: eine schematisch Darstellung der Relativpositionen zwischen einer Drehachse einer Blende, dem Mittelpunkt eines eingegrenzten Querschnittsbereichs des Beleuchtungslichts und einer optischen Achse.

Gleiche und gleich wirkende Bestandteile sind in den Figuren in der Regel mit denselben Bezugszeichen gekennzeichnet.

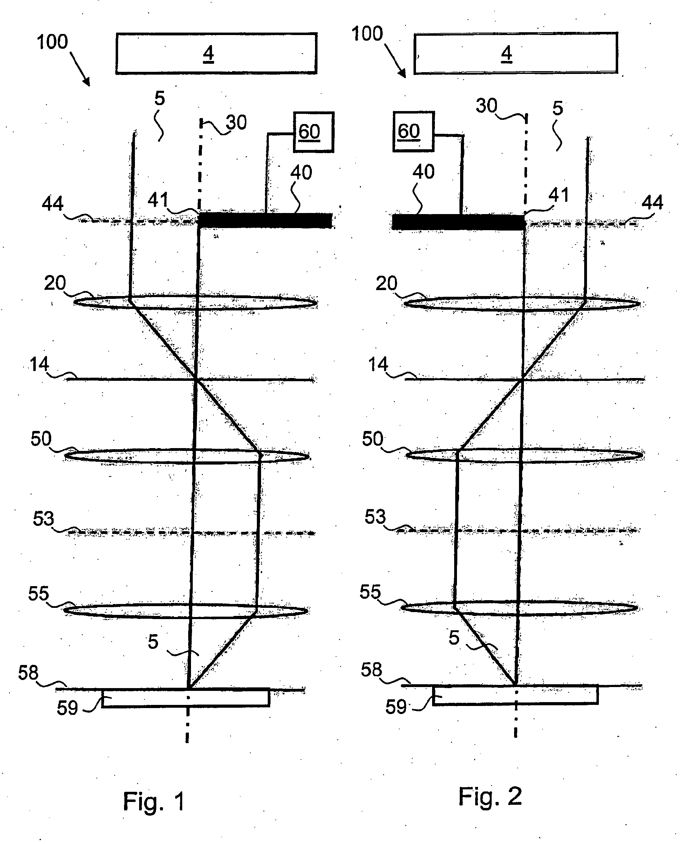

Ein erstes Ausführungsbeispiel eines erfindungsgemäßen Lichtmikroskops 100 ist schematisch in den Figuren 1 und 2 dargestellt. Als wesentliche Komponenten des Lichtmikroskops 100 sind eine Lichtquelle 4, ein Kondensor 20, ein Objektiv 50, eine Tubuslinse 55, Bildaufnahmemittel 59 sowie elektronische Steuerungsmittel 60 dargestellt.

Die Beleuchtungslichtquelle 4 strahlt Beleuchtungslicht 5 entlang einer optischen Achse 30 des Lichtmikroskops 100 ab. Das Beleuchtungslicht 5 wird mit optischen Mitteln 20, die hier einen Kondensor oder eine Kondensorlinse 20 umfassen, auf eine Probenebene 14 fokussiert. An der Probenebene 14 kann ein Probengefäß mit einer zu untersuchenden Probe positioniert werden.

Hinter der Probenebene 14 wird mit dem Objektiv 50 Beleuchtungslicht 5, das die Probe durchquert hat, gesammelt.

Im Strahlengang hinter dem Objektiv 50 wird das Beleuchtungslicht, im dargestellten Beispiel mittels der Tubuslinse 55, auf eine Bildebene 58 fokussiert. In der Bildebene 58 sind Bildaufnahmemittel 59, beispielsweise ein Kamerasensor oder -chip, angeordnet, um ein Bild der Probe aufzunehmen.

Erfindungsgemäß soll ein Phasenkontrastbild erzeugt werden, also ein Bild, dessen Helligkeitswerte von einer Phasenänderung abhängen, welche das Beleuchtungslicht beim Durchlaufen der Probe erfährt. Hierzu werden ein erstes und ein zweites Bild aufgenommen, die zu dem Kontrastbild, beispielsweise durch eine Differenzbildung, verrechnet werden.

Das erste und das zweite Bild unterscheiden sich darin, dass sie mit verschiedenen Einstellungen einer Blende 40 aufgenommen werden.

In Fig. 1 ist eine erste Blendeneinstellung gezeigt, bei der die Blende 40 einen Teil des Beleuchtungslichts 5 ausblendet, so dass dieser nicht die Probenebene 14 erreicht.

Bei Fig. 2 befindet sich die Blende 40 in einer zweiten Blendeneinstellung, in der sie einen anderen Anteil des Beleuchtungslichts 5 abdeckt.

Im dargestellten Ausführungsbeispiel befindet sich die Blende 40 in den Figuren 1 und 2 im Beleuchtungsstrahlengang im Bereich einer Pupillenebene 44, nämlich neben dem Kondensor 20 und in einer Aperturblendenebene 44, die konjugiert zu einer Objektivpupillenebene 53 ist.

Weiterhin weist das Lichtmikroskop 100 elektronische Steuerungsmittel 60 auf, mit denen die Blendeneinstellungen gemäß der Erfindung ermittelt und eingestellt werden.

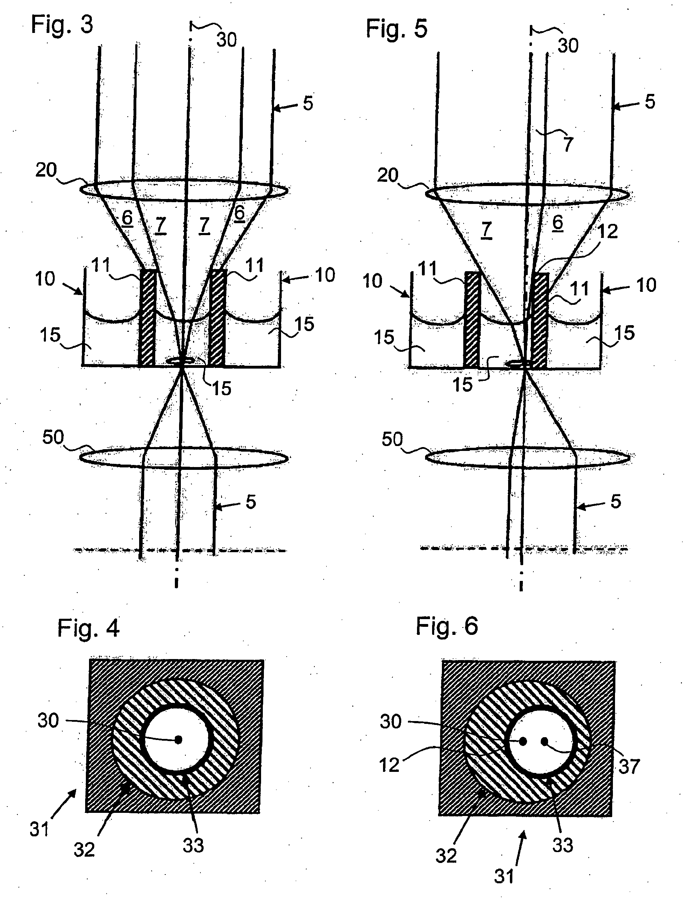

Bevor die Bestimmung der Blendeneinstellungen gemäß der Erfindung erläutert wird, werden mit Bezug auf die Figuren 3 bis 6 Effekte des Probengefäßes auf die Messungen erläutert.

In Fig. 3 ist schematisch der Strahlengang von Beleuchtungslicht 5 durch eine Probe 15 dargestellt. Das Beleuchtungslicht 5 wird mit einem Kondensor 20 auf die Probe 15 fokussiert und durch die Probe 15 transmittiertes Licht 5 wird mit einem Objektiv 50 aufgefangen.

Im dargestellten Beispiel wird eine Mikrotiterplatte mit mehreren Probengefäßen 10 eingesetzt, in denen sich jeweils eine Probe 15 befindet. Die einzelnen Probengefäße 10 werden durch Wände 11, die etwa entlang der optischen Achse des Lichtmikroskops verlaufen, voneinander getrennt. Die Wand 11 des Probengefäßes 10, durch das die optische Achse verläuft, beschneidet das Beleuchtungslicht 5 in einem Querschnitt quer zur optischen Achse. Dabei wird ein Anteil 6 des Beleuchtungslichts 5 ausgeblendet und lediglich ein Anteil 7 des Beleuchtungslichts 5 durchläuft die Probe 15 und wird anschließend vom Objektiv 50 weitergeleitet.

In Fig. 4 ist schematisch ein Querschnitt 31 des Beleuchtungslichts 5 quer zur optischen Achse für die Situation aus Fig. 3 dargestellt. In diesem Querschnitt ist eine maximale Querschnittsfläche 32 des Beleuchtungslichts 5 durch die Apertur des Objektivs bestimmt. Wegen der Wand 11 des Probengefäßes 10 wird aber nicht die maximale Querschnittsfläche 32 ausgeleuchtet. Vielmehr wird diese durch die Wand 11 auf einen eingegrenzten Querschnittsbereich 33 beschnitten.

Bei der Situation, die in den Figuren 3 und 4 dargestellt ist, wird ein zentraler Bereich der Probe 15 innerhalb des Probengefäßes 10 untersucht. Hierdurch ist der Beschnitt durch die Wände 11 symmetrisch zur optischen Achse 30 des Mikroskops. Dadurch liegt ein Mittelpunkt des durch die Wand 11 eingegrenzten Querschnittsbereichs 33 gerade auf der optischen Achse 30.

Wird hingegen ein nichtzentraler Bereich der Probe 15 untersucht, so weicht der Mittelpunkt des durch die Wand 11 eingegrenzten Querschnittsbereichs 33 von der optischen Achse 30 ab. Diese Situation ist in den Figuren 5 und 6 dargestellt.

Bei Fig. 5 ist das Probengefäß 10 verschoben, so dass die optische Achse 30 durch einen zu untersuchenden Randbereich der Probe 15 verläuft. Als Folge liegt ein Wandbereich 12 näher an der optischen Achse 30 als die übrigen Bereiche der Wand 11. Diese Entfernung soll in einer Ebene senkrecht zur optischen Achse 30 definiert sein. Durch den nächstliegenden Wandbereich 12 wird ein verhältnismäßig großer Anteil 6 des Beleuchtungslichts 5 blockiert. Der hierzu gegenüberliegende Bereich der Wand 11 blockiert das Beleuchtungslicht 5 hingegen nicht oder nur kaum.

In Fig. 6 ist erkennbar, dass als Folge dieses Beschnitts durch die Wand 11 der Mittelpunkt 37 des eingegrenzten Querschnittsbereichs 33 nicht mit der optischen Achse 30 zusammenfällt.

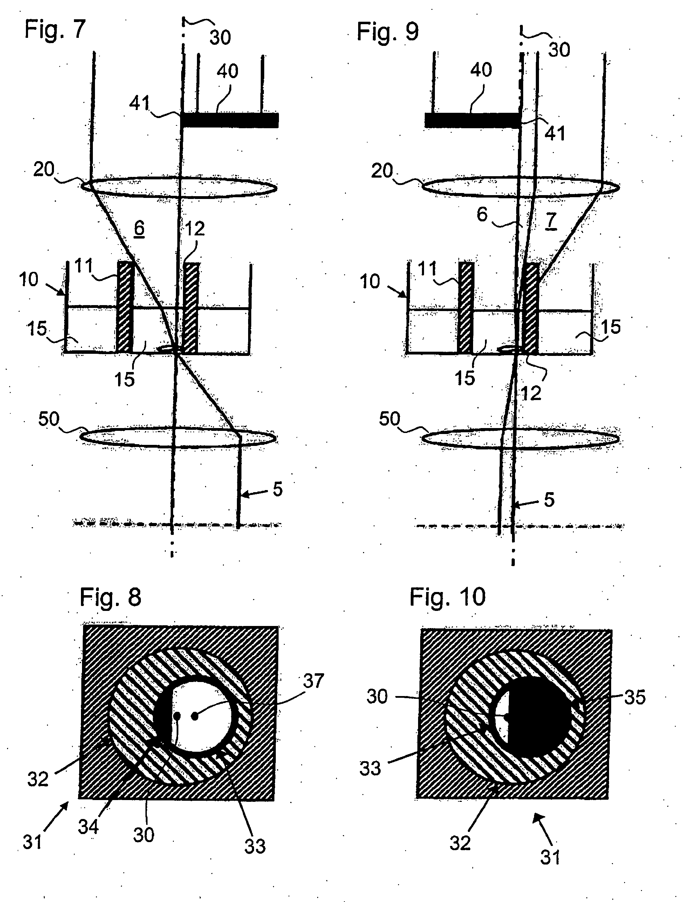

Wird nun eine Blende in den Strahlengang gebracht, ergeben sich Schwierigkeiten, die in den Figuren 7 bis 10 dargestellt sind und durch das erfindungsgemäße Verfahren sowie das erfindungsgemäße Lichtmikroskop gelöst werden.

Die Figuren 7 und 9 zeigen schematisch Situationen, in denen die Blende 40 in den Strahlengang des Beleuchtungslichts 5 eingebracht ist. In beiden Fällen berührt eine Blendenkante 41 der Blende 40 die optische Achse 30. Dadurch deckt die Blende 40 in beiden Fällen jeweils eine Hälfte des Querschnitts des Beleuchtungslichts 5 und somit auch der Objektivapertur 32 ab.

Durch die Wand 11 des Probengefäßes 10 wird im dargestellten Beispiel aber lediglich ein eingegrenzter Querschnittsbereich 33 freigelassen, dessen Mittelpunkt 37 nicht mit der optischen Achse 30 zusammenfällt, wie auch in Fig. 8 dargestellt. Der in diesem Fall durch die Blende 40 abgedeckte Bereich 34 deckt zwar die Hälfte der Objektivapertur 34 ab, aber nicht die Hälfte des eingegrenzten Querschnittsbereichs 33 des Beleuchtungslichts.

In der Situation aus Fig. 9 deckt die Blende 40 gerade die andere Hälfte des Querschnitts des Beleuchtungslichts 5 ab. Der hierdurch abgedeckte Bereich 35 der eingegrenzten Querschnittsfläche 33 ist in Fig. 10 dargestellt.

Es ist erkennbar, dass der in Fig. 8 durch die Blende abgedeckte Anteil 34 des eingegrenzten Querschnittsbereichs 33 deutlich kleiner ist als der zweite abgedeckte Anteil 35 aus Fig. 10, obwohl in beiden Fällen jeweils eine Hälfte des maximalen Querschnitts 32 des Beleuchtungslichts abgedeckt wird.

Werden nun mit diesen beiden Blendeneinstellungen zwei Bilder der Probe aufgenommen, können diese nicht sinnvoll zu einem Kontrastbild verrechnet werden.

Dieses Problem beruht auf der bezüglich der optischen Achse asymmetrischen Abdeckung des Beleuchtungslichts durch die Wand des Probengefäßes. Diese nachteiligen Auswirkungen der Wand des Probengefäßes können durch weitere Effekte beeinflusst werden.

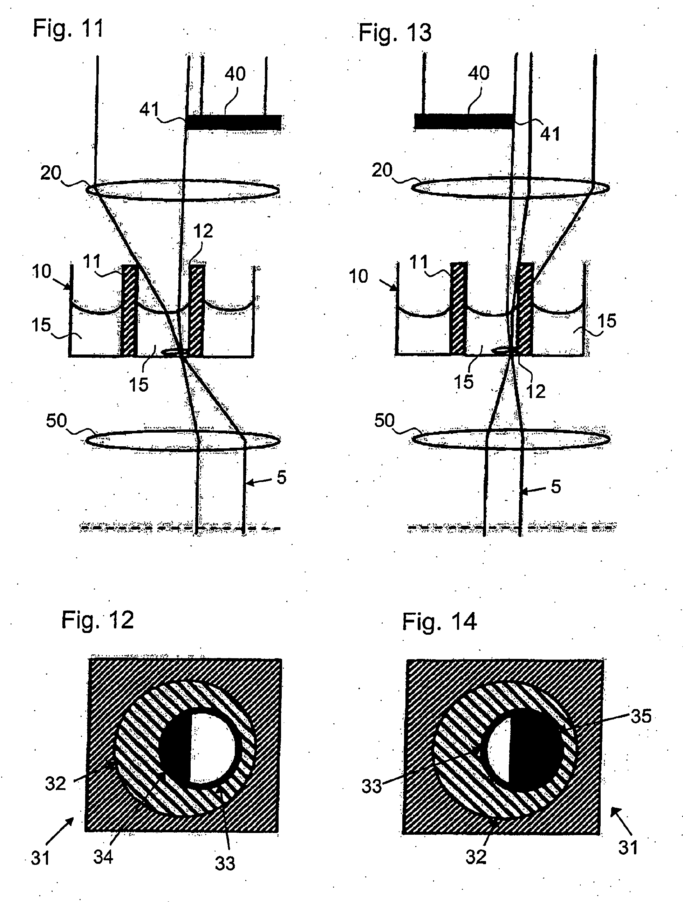

Dies wird mit Bezug auf die Figuren 11 bis 14 veranschaulicht. In den Figuren 11 und 13 sind wiederum zwei Situationen dargestellt, in denen mit der Blende 40 jeweils eine Hälfte des Querschnitts des Beleuchtungslichts 5 abgedeckt wird. Die Figuren 12 und 14 zeigen die dazugehörigen Querschnitte 31 des Beleuchtungslichts 5 quer zur optischen Achse 30.

Bei den Figuren 11 und 13 ist die Probe 15 eine wässrige Lösung, die aufgrund von Oberflächenspannungen eine gekrümmte Oberfläche hat. An dieser Oberfläche wird das einfallende Beleuchtungslicht 5 gebrochen. Dabei ist der Neigungswinkel der Oberfläche der Probenflüssigkeit positionsabhängig. Je nach Position der optischen Achse relativ zum Zentrum des Probengefäßes trifft einfallendes Beleuchtungslicht somit in unterschiedlichen Neigungswinkeln auf die Oberfläche der Probenflüssigkeit. Hierdurch wird die Position des durch die Wand des Probengefäßes eingegrenzten Querschnittsbereichs verändert.

Die Oberflächenform der Probenflüssigkeit hängt von verschiedenen Faktoren ab, insbesondere von dem Material der Wände des Probengefäßes, dem Durchmesser des Probengefäßes, der Art und Viskosität der Probenflüssigkeit und der mechanischen Manipulation der Flüssigkeit, also ob beispielsweise die Probe nach Einfüllen in das Probengefäß nochmals umgerührt wurde.

Hierdurch entsteht der in den Figuren 12 und 14 dargestellte kreisförmige eingegrenzte Querschnittsbereich 33, der bei den Blendeneinstellungen, die in den Figuren 11 und 13 dargestellt sind, nicht halbiert wird. Eine sinnvolle Verrechnung hiermit aufgenommener Bilder ist deshalb nicht oder nur schwer möglich.

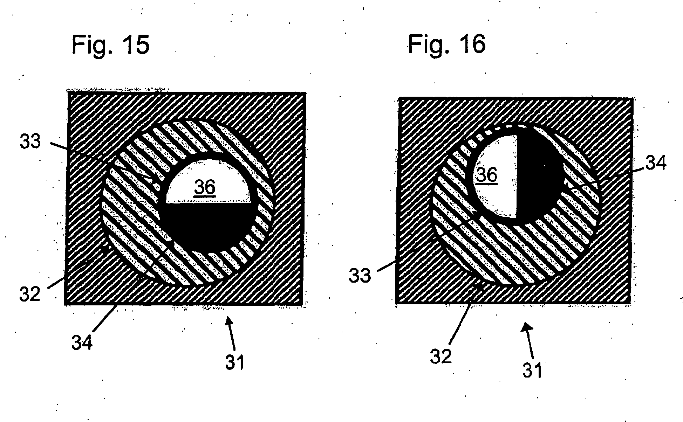

Die Lösung dieses Problems mit dem erfindungsgemäßen Verfahren und dem erfindungsgemäßen Lichtmikroskop wird mit Bezug auf Fig. 15 erläutert. Diese Figur zeigt einen Querschnitt 31 des Beleuchtungslichts quer zur optischen Achse. Auch hier wird ein durch das Objektiv bedingter maximaler Querschnitt 32 des Beleuchtungslichts nicht vollständig ausgeleuchtet. Vielmehr wird das Beleuchtungslichf durch die Wand des Probengefäßes beschnitten. Der hierdurch verursachte, im dargestellten Beispiel kreisförmige, eingegrenzte Querschnittsbereich 33 liegt beabstandet zum Zentrum des maximalen Querschnitts 32.

Vorteilhafterweise wird im dargestellten Beispiel dennoch als erster abgedeckter Querschnittsflächenanteil 34 gerade eine Hälfte des eingegrenzten Querschnittsbereichs 33 abgedeckt.

Wird von dieser ersten Blendeneinstellung ausgehend die Blende in eine zweite Blendeneinstellung bewegt, in der sie gerade die andere Hälfte des Querschnitts des Beleuchtungslichts abdeckt, so wird auch die andere Hälfte des eingegrenzten Querschnittsbereichs 33 dadurch abgedeckt. Somit ist der Querschnittsflächenanteil des Beleuchtungslichts, der in der ersten und in der zweiten Blendeneinstellung die Probe durchläuft und nachgewiesen wird, gleich groß. Unterschiede in den Bildhelligkeiten der beiden auf diese Weise aufgenommenen Bilder beruhen folglich allein auf der Probe und nicht auf der Lage des Probengefäßes. Vorteilhafterweise kann deshalb aus den beiden Bildern ein Phasenkontrastbild berechnet werden.

Fig. 16 zeigt eine Situation, bei der ein anderer Bereich der Probe untersucht wird. Dieser liegt ebenfalls außerhalb des Zentrums des Probengefäßes, wodurch der durch die Wand des Probengefäßes eingegrenzte Querschnittsbereich 33 des Beleuchtungslichts wiederum am Rand der Objektivapertur 32 liegt. Durch eine geeignete Teilung des eingegrenzten Querschnittsbereichs 33 in zwei gleich große Bereiche, im vorliegenden Fall in zwei Hälften, können auch hier in der ersten und der zweiten Blendeneinstellung Bilder mit gleicher Beleuchtungsstärke aufgenommen werden.

Zur Bestimmung von zwei Blendeneinstellungen, in denen jeweils gleich große Anteile des eingegrenzten Querschnittsbereichs 33 abgedeckt werden, kann eine Symmetriegerade bestimmt werden. Die von der Blende in den beiden Blendeneinstellungen abgedeckten Bereiche sollen dann achssymmetrisch zur Symmetriegeraden liegen. Die Blende selbst liegt damit ebenfalls symmetrisch zur Symmetriegeraden. In den Situationen der Figuren 15 und 16 ist die Symmetriegerade die Trennlinie des abgedeckten Querschnittsflächenanteils 34 zu dem freigelassenen Anteil 36 des eingegrenzten Querschnittsbereichs 33.

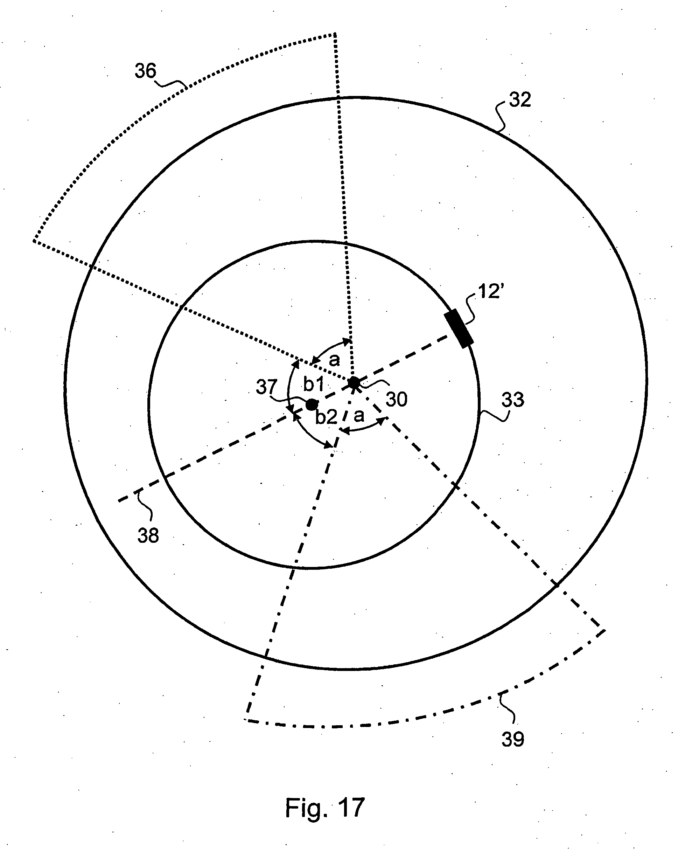

Eine Verfahrensvariante gemäß der Erfindung zur Bestimmung der Symmetriegeraden 38 wird mit Bezug auf Fig. 17 beschrieben. Dargestellt ist ein schematischer Querschnitt senkrecht zur optischen Achse 30. Ein maximaler Querschnitt 32 des Beleuchtungslichts ist wiederum durch das Objektiv vorgegeben. Die optische Achse 30 kann im Mittelpunkt dieses maximalen Querschnitts 32 liegen. Der Querschnitt des Beleuchtungslichts wird jedoch durch die Wand des Probengefäßes auf den eingegrenzten Querschnittsbereich 33 beschnitten.

Bei einem Probengefäß, dessen Wand im Querschnitt rund oder ringförmig ist, hat auch der eingegrenzte Querschnittsbereich 33 eine runde Form. Dessen Mittelpunkt 37 liegt im dargestellten Beispiel beabstandet zur optischen Achse 30 und damit beabstandet vom Zentrum des maximalen Querschnittsbereichs 32. Erfindungsgemäß kann die Position des Probengefäßes bezüglich der optischen Achse 30 bestimmt werden. Dies kann beispielsweise mittels eines mechanischen Positioniersystems der Probenhalterung erfolgen. Alternativ kann ein Bild der Probe aufgenommen werden, insbesondere eine Übersichtsmessung bei geringer Vergrößerung, und mit Bildverarbeitungsmitteln wird die Lage des Probengefäßes bezüglich der optischen Achse bestimmt. Hiermit kann der Wandbereich des Probengefäßes, der am nächsten zur optischen Achse liegt, bestimmt werden. Sodann kann eine Senkrechte auf eine Tangentialebene an dem nächstliegenden Wandbereich bestimmt werden. Diese Senkrechte wird als Symmetriegerade 38 festgelegt.

In Fig. 17 ist mit 12' die Stelle des eingegrenzten Querschnittsbereichs 33 gekennzeichnet, die durch den nächstliegenden Wandbereich 12 des Probengefäßes festgelegt wird. Die Symmetriegerade 38 verläuft von 12' ausgehend durch die optische Achse 30 und durch den Mittelpunkt 37 des eingegrenzten Querschnittsbereichs 33.

Als erste und zweite Blendeneinstellung werden nun solche Positionen der Blende eingestellt, die spiegelbildlich zur Symmetriegeraden 38 liegen.

Im dargestellten Beispiel wird eine kreissegmentförmige Blende verwendet, die ein Kreissegment mit dem Winkel a freilässt. Hierdurch entsteht ein erster freigelassener Querschnittsflächenanteil 36 mit einem Öffnungswinkel a. Mit dieser Einstellung kann ein erstes Bild der Probe aufgenommen werden. Daraufhin wird die Blende zu einer zweiten Blendeneinstellung bewegt, in der sie einen zweiten freigelassenen Querschnittsflächenanteil 39 freilässt und die übrige Querschnittsfläche des Beleuchtungslichts abdeckt. Die beiden freigelassenen Querschnittsflächen 36 und 39 werden dabei spiegelbildlich zur Symmetriegeraden 38 gewählt, das heißt die beiden Winkel b1 und b2 der freigelassenen Querschnittsflächen 36 und 39 zu der Symmetriegeraden 38 sind gleich groß.

Fig. 17 verdeutlicht, dass mit der vorgegebenen Blendenform verschiedene Paare von ersten und zweiten Blendeneinstellungen möglich sind, solange die Winkel b1 und b2 gleich groß gewählt werden.

Ein besonders guter Bildkontrast wird erreicht, wenn die freigelassenen Querschnittsflächen 36 und 39 möglichst genau die Hälfte des eingegrenzten Querschnittsflächenbereichs 33 freilassen. Hierzu kann die Blende in der ersten sowie in der zweiten Blendeneinstellung jeweils mit einer Blendenkante angrenzend an die Symmetriegerade 38 positioniert werden. Die Winkel b1 und b2 sind in diesem Fall gleich Null.

Eine Drehachse der Blende 40 muss aber nicht mit der optischen Achse 30 zusammenfallen. Beispielsweise kann die Drehachse abhängig vom Einbau und der Justage der Blende 40 beabstandet zur optischen Achse 30 liegen. Auch kann eine Verschiebung der optischen Achse 30 relativ zur Drehachse bei einer Änderung von schaltbaren Komponenten im Strahlengang erfolgen. Beispielsweise kann ein Objektivwechsel zu einer Verschiebung der optischen Achse 30 führen.

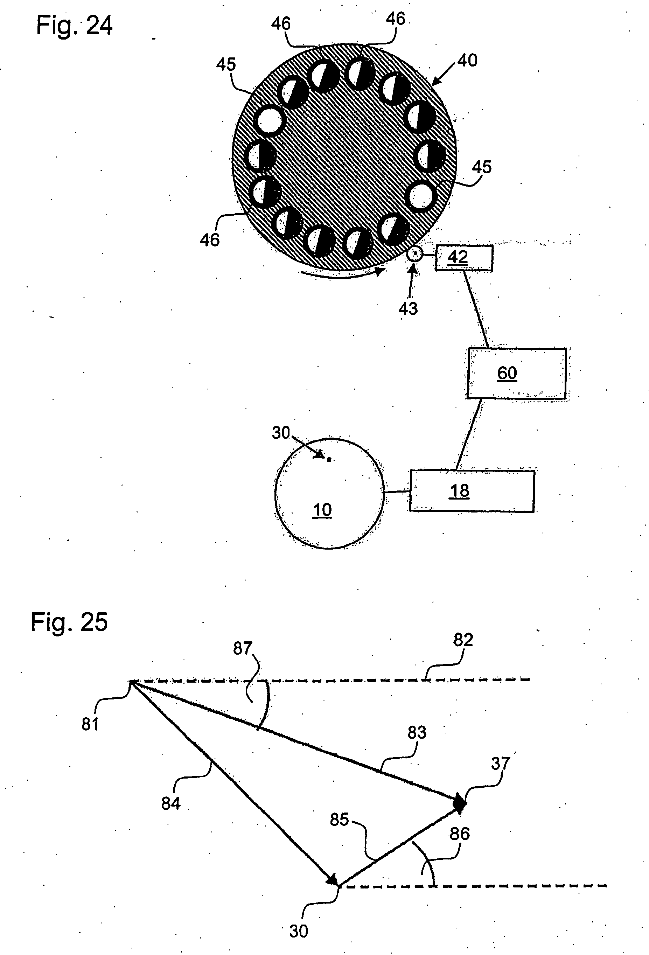

In diesen Fällen verläuft eine Blendenkante in der ersten und zweiten Blendeneinstellung vorzugsweise nicht durch die optische Achse 30. Die räumlichen Zusammenhänge werden näher mit Bezug auf Fig. 25 beschrieben. Diese zeigt einen Schnitt senkrecht zur optischen Achse 30. Neben der optischen Achse 30 sind die Drehachse 81 der Blende sowie der Mittelpunkt 37 des Beleuchtungsquerschnitts, der durch die Wände des Probengefäßes eingegrenzt ist, dargestellt.

Als Symmetriegerade kann im dargestellten Fall eine Gerade oder ein Vektor 83 verwendet werden, welcher von der Drehachse 81 zum Mittelpunkt 37 verläuft.

Der Verbindungsvektor 83 steht in einem Winkel 87 zu einer Bezugsrichtung 82, welche auch eine mögliche Ausrichtung der Blendenkante darstellt. Als erste und zweite Blendeneinstellung wird aber der Winkel 87 bevorzugt zu 0° und 180° gewählt. Dadurch verläuft in beiden Fällen die Blendenkante durch den Mittelpunkt 37 und deckt jeweils eine Hälfte des eingegrenzten Querschnittsbereichs des Beleuchtungslichts ab.

Das Ermitteln der beiden Blendeneinstellungen kann durch ein trial-and-error-Verfahren erfolgen. Bei diesem wird mit beliebigen Paaren von Blendeneinstellungen jeweils ein Kontrastbild der Probe erzeugt. Die Blendeneinstellungen eines Paares können sich jeweils durch einen Drehwinkel von 180° voneinander unterscheiden.

Alternativ können die beiden Blendeneinstellungen durch Ermitteln der Positionen des Mittelpunkts 37 und der Drehachse 81 bestimmt werden.

In einer Kalibrierungsmessung kann zunächst die Lage der Drehachse 81 relativ zur optischen Achse 30, das heißt der Verbindungsvektor 84, bestimmt werden. Hierfür kann beispielsweise in Pupillenbildern der Verlauf der Blendenkante bei verschiedenen Drehwinkeln betrachtet werden. Der Verbindungsvektor 84 ist unabhängig oder weitgehend unabhängig davon, welche Probe und welcher Probenbereich innerhalb der Probe betrachtet werden.

Die Relativposition des Mittelpunkts 37 zur optischen Achse 30, das heißt der Verbindungsvektor 85, kann aus der Kenntnis der Geometrie des Probengefäßes und der Kenntnis der aktuellen Beobachtungsposition berechnet werden. Alternativ kann der Mittelpunkt 37 auch durch eine Bildaufnahme ermittelt werden. Die Orientierung des Verbindungsvektors 85 kann durch einen Winkel 86 angegeben werden.

Der gesuchte Verbindungsvektor 83 kann sodann durch Addieren der Verbindungsvektoren 84 und 85 berechnet werden.

Bei einem Wechsel von optischen Komponenten, beispielsweise einem Austausch des Objektivs, können die oben beschriebenen Schritte zum Bestimmen des Verbindungsvektors 83 erneut durchgeführt werden.

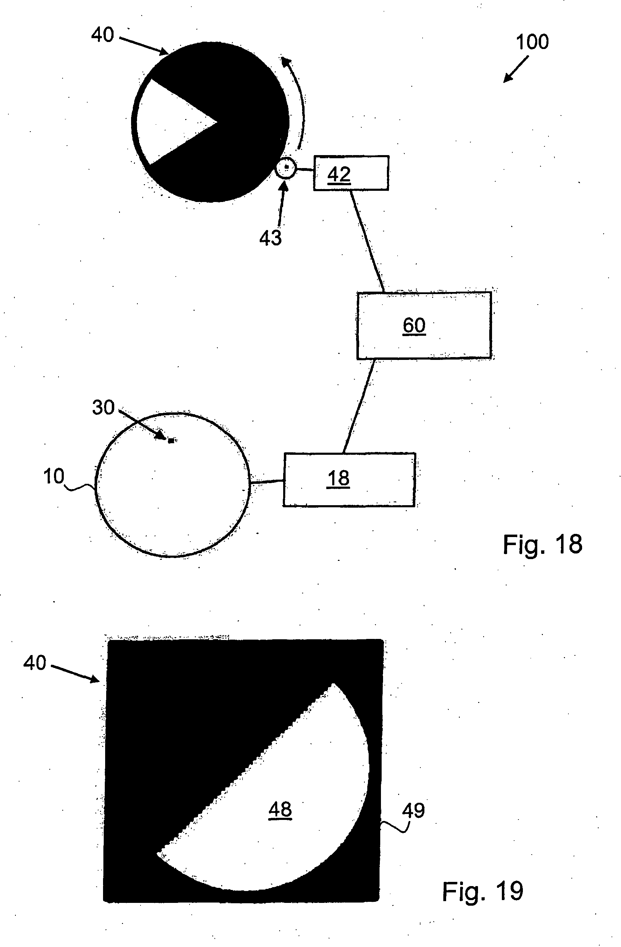

Ein weiteres Ausführungsbeispiel eines erfindungsgemäßen Lichtmikroskops 100 ist schematisch in Fig. 18 gezeigt.

Dargestellt ist ein Probengefäß 10, dessen Zentrum beabstandet zur optischen Achse 30 liegt. Um verschiedene Bereiche innerhalb des Probengefäßes 10 untersuchen zu können, sind Positioniermittel 18 vorhanden. Mit diesen kann ein Probentisch des Lichtmikroskops und damit auch das Probengefäß 10 bewegt werden.

Zudem ist eine Blende 40 vorhanden, die mit einem Blendenmotor 43 bewegt werden kann. Insbesondere kann die Blende 40 um die optische Achse 30 als Drehmittelpunkt gedreht werden. Der Blendenmotor 43 wird mit Steuerungsmitteln 42 gesteuert. Eine automatische Steuerung der Positioniermittel 18 und der Steuerungsmittel 42 für den Blendenmotor 43 kann mit den elektronischen Steuerungsmitteln 60 erfolgen. Diese können innerhalb eines Gehäuses des Lichtmikroskops 100 angeordnet sein, oder auch durch einen externen Computer außerhalb des Mikroskopgehäuses ausgeführt sein.

Im dargestellten Beispiel lässt die Blende 40 ein Kreissegment mit einem Öffnungswinkel von kleiner als 180° frei. Bei einer Ausführungsvariante wird diese Blende 40 während der Belichtungszeit zur Aufnahme des ersten Bildes um einen bestimmten Drehwinkel gedreht. Alternativ kann vorgesehen sein, dass die Blende 40 durchgängig gedreht wird und für die Aufnahme des ersten Bildes ein kurzzeitiger Lichtimpuls nur dann ausgesendet wird, wenn sich die Blende 40 an einer bestimmten Drehposition befindet. Die Aufnahme des zweiten Bildes erfolgt in beiden Fällen in analoger Weise, wobei die in der ersten und der zweiten Blendeneinstellung abgedeckten Bereiche symmetrisch zur oben beschriebenen Symmetriegeraden liegen.

An Stelle der in Fig. 18 dargestellten Blende 40 mit Kreissegmentform kann auch eine Blende mit linearer Blendenkante verwendet werden, welche so positioniert wird, dass sie die optische Achse 30 berührt.

Ein weiteres Ausführungsbeispiel eines erfindungsgemäßen Lichtmikroskops wird mit Bezug auf Fig. 24 beschrieben. Dieses unterscheidet sich von dem Lichtmikroskop aus Fig. 18 in der Gestaltung der Blende 40. Bei Fig. 24 ist die Blende 40 als Blendengruppe mit mehreren Einzelblenden 46 ausgeführt. Die Einzelblenden 46 sind in der Blendengruppe 40 starr zueinander angeordnet. Durch Drehen der Blendengruppe 40 kann jeweils genau eine der Einzelblenden 46 in den Strahlengang des Beleuchtungslichts eingebracht werden. Die Einzelblenden 46 weisen jeweils eine Blendenkante auf. Diese sind so orientiert, dass sie in verschiedenen Ausrichtungen zueinander stehen, wenn sie jeweils in den Strahlengang eingebracht sind. Die Anzahl möglicher Blendeneinstellungen entspricht der Anzahl an Einzelblenden 46.

Die Blendengruppe 40 verfügt weiterhin über mindestens einen freien Durchlass 45. Wird die Blendengruppe 40 so weit gedreht, dass der Durchlass 45 im Strahlengang des Beleuchtungslichts liegt, wird kein Beleuchtungslicht durch die Blendengruppe 40 blockiert. Dies kann beispielsweise für Fluoreszenzmessungen gewünscht sein. Durch einen freien Durchlass 45 muss vorteilhafterweise die Blendengruppe 40 nicht aus dem Strahlengang des Beleuchtungslichts entfernt werden, um ein Probenbild ohne Beschnitt durch die Blendengruppe 40 aufzunehmen.

Eine Blende 40 eines weiteren Ausführungsbeispiels eines erfindungsgemäßen Lichtmikroskops ist in Fig. 19 dargestellt. Hier umfasst die Blende 40 ein Array 48 aus Flüssigkristallelementen. In der dargestellten Situation ist eine Hälfte der Flüssigkristallelemente auf Opazität geschaltet, während die andere, weiß dargestellte Hälfte des Arrays 48 auf Transparenz geschaltet ist.

Im abgebildeten Beispiel hat das Array 48 eine runde Form und wird von einer mechanischen zusätzlichen Blende 49 umrandet.

In Bezug auf die Figuren 1, 2 und 7 bis 14 wurden Ausführungsformen beschrieben, bei denen die Blende 40 zwischen der Lichtquelle 4 und der Probenebene 14 oder Probe 15 angeordnet ist. Untersuchungen haben gezeigt, dass eine solche Anordnung der Blende 40 besonders vorteilhaft ist, wenn die Beleuchtungsapertur größer als die Detektionsapertur ist.

Der Beschnitt des Beleuchtungslichts durch die Wände des Probengefäßes verringert jedoch die Beleuchtungsapertur. Dadurch ist diese oftmals geringer als die Detektionsapertur. Versuche haben ergeben, dass in diesem Fall Bilder mit besserem Kontrast erzeugt werden können, wenn die Blende 40 im Detektionsstrahlengang angeordnet wird, das heißt zwischen der Probenebene 14 oder Probe 15 und Bildaufnahmemitteln.

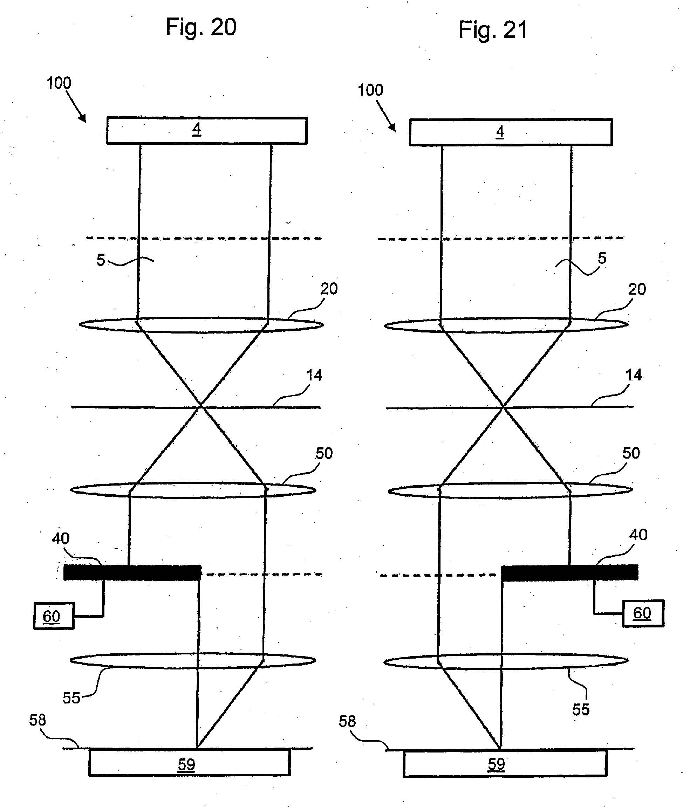

Ausführungen mit einer solchen Blendenanordnung sind in den Figuren 20 bis 23 dargestellt.

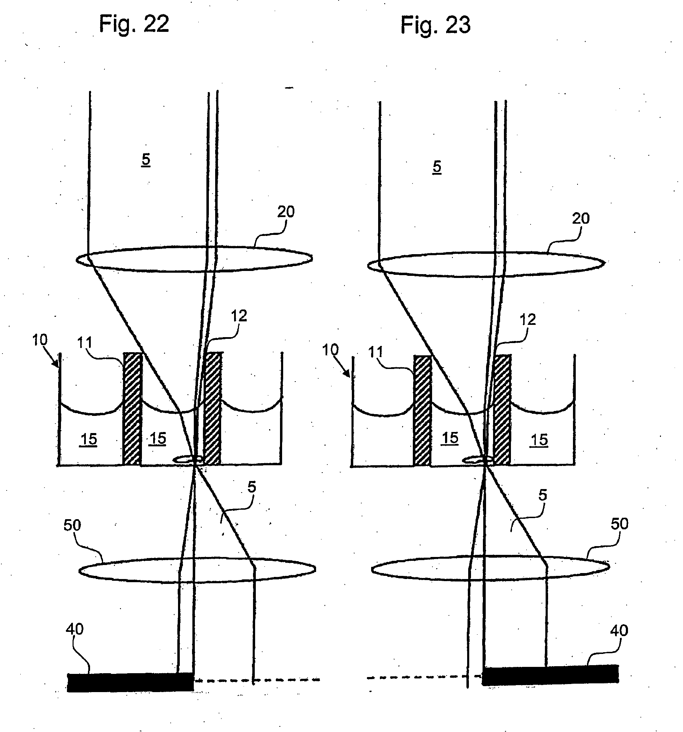

Die Figuren 22 und 23 zeigen wesentliche Teile eines Lichtmikroskops. Bis auf die Anordnung der Blende 40 im Detektionsstrahlengang entspricht diese Ausführung der in den Figuren 7 und 9 dargestellten Variante. Figur 22 und 23 zeigen zwei verschiedene Blendeneinstellungen, bei denen unterschiedlich große Anteile des Querschnittsbereichs des Beleuchtungslichts, welcher durch die Wände 11, 12 des Probengefäßes 10 eingegrenzt ist, abdeckt. Die von der Blende 40 in den beiden Blendeneinstellungen abgedeckten Bereiche entsprechen daher denen, die in den Figuren 8 und 10 dargestellt sind.

Gemäß der Erfindung erfolgt die Bildaufnahme nicht mit diesen Blendeneinstellungen. Vielmehr werden Blendeneinstellungen vorgenommen, bei denen die Blende 40 gleich große Bereiche des eingegrenzten Querschnittsbereichs abdeckt. Dazu kann beispielsweise eine Blendenkante der Blende 40 in den beiden Blendeneinstellungen symmetrisch zu einer Gerade liegen, die durch den Mittelpunkt des eingegrenzten Querschnittsbereichs verläuft.

Die Anordnung der Blende 40 im Detektionsstrahlengang ist detaillierter in den Figuren 20 und 21 dargestellt. Diese Figuren entsprechen bis auf die Anordnung der Blende 40 den Figuren 1 und 2. Bei den Figuren 20 und 21 ist die Blende 40 zwischen dem Objektiv 50 und einer Tubuslinse 55 angeordnet. Bevorzugt wird die Blende 40 in einer Pupillenebene positioniert, welche zur Objektivpupillenebene konjugiert ist, das heißt die Objektivpupillenebene wird in diese Pupillenebene abgebildet. Prinzipiell kann die Blende 40 aber auch in der Objektivpupillenebene selbst angeordnet sein.

Mit allen Varianten der beschriebenen Blenden und der Blendenpositionen können erfindungsgemäß zwei verschiedene Blendeneinstellungen bestimmt und eingestellt werden, in denen gleichgroße Anteile des durch die Wand des Probengefäßes eingegrenzten Querschnittsbereichs des Beleuchtungslichts freigelassen werden. Vorteilhafterweise können aus zwei in dieser Weise aufgenommenen Bildern ein Kontrastbild besonders guter Qualität erzeugt werden.

### Bezugszeichenliste:

- 100: Lichtmikroskop
- 4: Beleuchtungslichtquelle
- 5: Beleuchtungslicht
- 6: ausgeblendeter Anteil des Beleuchtungslichts
- 7: durchgelassener Anteil des Beleuchtungslichts
- 10: Probengefäß
- 11: Wand des Probengefäßes
- 12: nächstliegender Wandbereich zur optischen Achse
- 14: Probenebene
- 15: Probe
- 18: Positioniermittel
- 20: optische Mittel, Kondensor
- 30: optische Achse
- 31: Querschnitt quer zur optischen Achse
- 32: maximaler Querschnitt des Beleuchtungslichts
- 33: eingegrenzter Querschnittsbereich
- 34: erster abgedeckter Querschnittsflächenanteil
- 35: zweiter abgedeckter Querschnittsflächenanteil
- 36: erster freigelassener Querschnittsflächenanteil
- 37: Mittelpunkt des eingegrenzten Querschnittsbereichs 33
- 38: Symmetriegerade, Verbindungsgerade
- 39: zweiter freigelassener Querschnittsflächenanteil
- 40: Blende
- 41: Blendenkante
- 42: Steuerungsmittel für den Blendenmotor
- 43: Blendenmotor
- 44: Aperturblendenebene
- 45: freier Durchlass der Blendengruppe
- 46: Einzelblenden
- 48: Array aus Flüssigkristallelementen als Blende
- 49: zusätzliche mechanische Blende
- 50: Objektiv
- 53: Objektivpupillenebene
- 55: Tubuslinse
- 58: Bildebene
- 59: Bildaufnahmemittel
- 60: elektronische Steuerungsmittel
- 81: Drehachse der Blende
- 82: Bezugsrichtung; momentane Ausrichtung der Blendenkante
- 83: Verbindungsvektor von der Drehachse 81 der Blende zum Mittelpunkt 37
- 84: Verbindungsvektor von der Drehachse 81 der Blende zur optischen Achse 30
- 85: Verbindungsvektor von der optischen Achse 30 zum Mittelpunkt 37
- 86: Winkel des Verbindungsvektors 85
- 87: Winkel zwischen einer Bezugsrichtung und dem Verbindungsvektor 83

## Patentansprüche

1. Verfahren zur Bildaufnahme mit einem Lichtmikroskop (100),
bei dem an einer Probenhalterung des Lichtmikroskops ein Probengefäß (10) mit einer Probe (15) angebracht wird,
bei dem Beleuchtungslicht (5) auf die Probe (15) geleitet wird, **dadurch gekennzeichnet, dass** eine Blende (40) zum Beschneiden des Beleuchtungslichts (5) in einen Strahlengang des Beleuchtungslichts (5) gebracht wird,
eine erste Blendeneinstellung vorgenommen wird, bei welcher die Blende (40) einen ersten Querschnittsflächenanteil (34) des Beleuchtungslichts (5) abdeckt,
mit der ersten Blendeneinstellung ein erstes Bild der Probe (15) aufgenommen wird,
eine zweite Blendeneinstellung vorgenommen wird, bei welcher die Blende (40) einen zweiten Querschnittsflächenanteil (35) des Beleuchtungslichts (5) abdeckt, der von dem ersten Querschnittsflächenanteil (34) verschieden ist,
mit der zweiten Blendeneinstellung ein zweites Bild der Probe (15) aufgenommen wird,
das erste Bild und das zweite Bild zum Erstellen eines Kontrastbildes miteinander verrechnet werden,
zu einem eingegrenzten Querschnittsbereich (33) des Beleuchtungslichts (5), der durch eine Wand (11) des Probengefäßes (10) definiert ist, als erste und als zweite Blendeneinstellung solche Blendeneinstellungen ermittelt und eingestellt werden, bei denen die Blende (40) gleich große Anteile des eingegrenzten Querschnittsbereichs (33) abdeckt,
wobei das Beleuchtungslicht (5) in einem Querschnitt (31) quer zu einer optischen Achse (30) des Lichtmikroskops (100) durch die Wand (11) des Probengefäßes (10) auf den eingegrenzten Querschnittsbereich (33) beschnitten wird.

2. Verfahren nach Anspruch 1,
**dadurch gekennzeichnet,**
**dass** die Blende (40) zwischen der Probe (15) und Bildaufnahmemitteln (59) in den Strahlengang gebracht wird.

3. Verfahren nach Anspruch 1,
**dadurch gekennzeichnet,**
**dass** die Blende (40) zwischen einer Beleuchtungslichtquelle (4) und der Probe (15) in den Strahlengang gebracht wird.

4. Verfahren nach einem der Ansprüche 1 bis 3,
**dadurch gekennzeichnet,**
**dass** ein Mittelpunkt (37) des eingegrenzten Querschnittsbereichs (33) des Beleuchtungslichts (5) bestimmt wird,
**dass** als Symmetriegerade (38) eine Gerade festgelegt wird, welche durch den Mittelpunkt (37) verläuft, und
**dass** als erste und zweite Blendeneinstellung solche Blendeneinstellungen eingestellt werden, bei denen die Fläche, die von der Blende (40) in der ersten Blendeneinstellung abgedeckt wird, und die Fläche, die von der Blende (40) in der zweiten Blendeneinstellung abgedeckt wird, symmetrisch zur Symmetriegeraden (38) liegen.

5. Verfahren nach Anspruch 4,
**dadurch gekennzeichnet,**
**dass** sich die Blendeneinstellungen in einem Drehwinkel einer Blendenkante (41) der Blende (40) um eine Drehachse (81) unterscheiden und
**dass** als Symmetriegerade (38) eine Gerade festgelegt wird, welche den Mittelpunkt (37) und die Drehachse (81) schneidet.

6. Verfahren nach Anspruch 5,
**dadurch gekennzeichnet,**
**dass** in einer Kalibriermessung eine Position der Drehachse (81) ermittelt wird.

7. Verfahren nach Anspruch 6,
**dadurch gekennzeichnet,**
**dass** in der Kalibriermessung mindestens zwei Pupillenbilder aufgenommen werden, bei denen die Blendenkante (41) in verschiedene Drehwinkel um die Drehachse (81) gebracht wird,
**dass** aus den Ausrichtungen der Blendenkante (41) in den verschiedenen Pupillenbildern die Position der Drehachse (81) ermittelt wird.

8. Verfahren nach einem der Ansprüche 1 bis 3,
**dadurch gekennzeichnet,**
**dass** als eine Symmetriegerade (38) eine Verbindungsgerade von der optischen Achse (30) oder von der Drehachse (81) zu einem nächstliegenden Wandbereich (12) des Probengefäßes (10) bestimmt wird,
wobei der nächstliegende Wandbereich (12) derjenige Teil der Wand (11) des Probengefäßes (10) ist, der sich am nächsten zu der optischen Achse (30) oder zu der Drehachse (81) befindet, und
**dass** als erste und zweite Blendeneinstellung solche Blendeneinstellungen eingestellt werden, bei denen die Fläche, die von der Blende (40) in der ersten Blendeneinstellung abgedeckt wird, und die Fläche, die von der Blende (40) in der zweiten Blendeneinstellung abgedeckt wird, symmetrisch zur Symmetriegeraden (38) liegen.

9. Verfahren nach einem der Ansprüche 4 bis 8,
**dadurch gekennzeichnet,**
**dass** zur Bestimmung der ersten und zweiten Blendeneinstellung in einer Übersichtsmessung ein Übersichtsbild der Probe (15) aufgenommen wird, dass in dem Übersichtsbild mittels Bildverarbeitungsmitteln die Position einer Wand (11) des Probengefäßes (10) ermittelt wird und
**dass** aus der ermittelten Position der Wand (11) der nächstliegende Wandbereich (12) zur optischen Achse (30) bestimmt wird und/oder dass mit der ermittelten Position der Wand (11) der Mittelpunkt (37) des eingegrenzten Querschnittsbereichs (33) bestimmt wird.

10. Verfahren nach einem der Ansprüche 1 bis 9,
**dadurch gekennzeichnet,**
**dass** zur Bestimmung der ersten und zweiten Blendeneinstellung die Blende (40) in den Strahlengang des Beleuchtungslichts (5) gebracht wird, dass die Blende (40) gedreht wird und bei verschiedenen Drehpositionen der Blende (40) Testbilder der Probe (15) aufgenommen werden, dass jeweils ein Paar von Testbildern, zu welchem die zugehörigen Drehpositionen der Blende (40) um 180° zueinander gedreht sind, hinsichtlich eines Bewertungskriteriums miteinander verrechnet werden, dass mit dem Bewertungskriterium eines der Paare an Testbildern ausgewählt wird und die zugehörigen beiden Blendeneinstellungen als erste und zweite Blendeneinstellung eingestellt werden.

11. Verfahren nach einem der Ansprüche 1 bis 10,
**dadurch gekennzeichnet,**
**dass** die Blende (40) durchgängig gedreht wird,
**dass** für eine erste Bildaufnahme ein Kamerasensor des Lichtmikroskops (100) über mehrere Umdrehungen der Blende (40) belichtet wird,
**dass** für die erste Bildaufnahme ein Lichtimpuls als Beleuchtungslicht (5) immer dann gesendet wird, wenn sich die Blende (40) an einer ersten Drehposition als erste Blendeneinstellung befindet, und ansonsten kein Beleuchtungslicht (5) ausgesendet wird,
**dass** für eine zweite Bildaufnahme der Kamerasensor des Lichtmikroskops (100) über mehrere Umdrehungen der Blende (40) belichtet wird,
**dass** für die zweite Bildaufnahme ein Lichtimpuls als Beleuchtungslicht (5) immer dann gesendet wird, wenn sich die Blende (40) an einer zweiten Drehposition als zweite Blendeneinstellung befindet, und ansonsten kein Beleuchtungslicht (5) ausgesendet wird.

12. Verfahren nach einem der Ansprüche 1 bis 11,
**dadurch gekennzeichnet,**
**dass** die Blende (40) eine Kreissegmentform hat, deren Kreissegmentöffnung eine Spitze aufweist, die die optische Achse (30) des Lichtmikroskops (100) berührt,
**dass** die Blende (40) durchgängig gedreht wird,
**dass** als erste Blendeneinstellung die Blende (40) einen ersten Drehbereich überstreicht, und
**dass** als zweite Blendeneinstellung die Blende (40) einen zweiten Drehbereich überstreicht.

13. Verfahren nach Anspruch 11 oder 12,
**dadurch gekennzeichnet,**
**dass** mit der ersten und/oder zweiten Blendeneinstellung ein Testbild aufgenommen wird,
**dass** eine Bildhelligkeit des aufgenommenen Testbildes oder der aufgenommenen Testbilder ermittelt wird,
**dass** mit der ermittelten Bildhelligkeit eine Belichtungszeit eines Kamerachips des Lichtmikroskops (100) so festgelegt wird, dass eine gewünschte Bildhelligkeit mit der ersten und/oder zweiten Blendeneinstellung erreicht wird, und dass die Drehgeschwindigkeit der Blende (40) so gewählt wird, dass die Zeit, die die Blende (40) zum Überstreichen des ersten und des zweiten Drehbereichs benötigt, jeweils gleich der festgelegten Belichtungszeit ist.

14. Lichtmikroskop
mit einer Probenhalterung zum Halten eines Probengefäßes (10) mit einer Probe (15),
mit optischen Mitteln (20) zum Leiten von Beleuchtungslicht (5) auf die Probe (15), **dadurch gekennzeichnet, dass**
mit einer Blende (40), die zum Beschneiden des Beleuchtungslichts (5) in einem Strahlengang des Beleuchtungslichts (5) anordenbar ist,
mit elektronischen Steuerungsmitteln (60) zum Einstellen einer ersten Blendeneinstellung, bei welcher die Blende (40) einen ersten Querschnittsflächenanteil (34) des Beleuchtungslichts (5) abdeckt, und
mit Bildaufnahmemitteln zum Aufnehmen eines erstes Bild der Probe (15) mit der ersten Blendeneinstellung,
wobei die elektronischen Steuerungsmittel (60) zum Einstellen einer zweiten Blendeneinstellung eingerichtet sind, bei welcher die Blende (40) einen zweiten Querschnittsflächenanteil (35) des Beleuchtungslichts (5) abdeckt, der von dem ersten Querschnittsflächenanteil (34) verschieden ist,
wobei mit den Bildaufnahmemitteln ein zweites Bild der Probe (15) mit der zweiten Blendeneinstellung aufnehmbar ist und
wobei die elektronischen Steuerungsmittel (60) dazu eingerichtet sind, das erste Bild und das zweite Bild zum Erstellen eines Kontrastbildes miteinander zu verrechnen,
die elektronischen Steuerungsmittel (60) dazu eingerichtet sind, zu einem eingegrenzten Querschnittsbereich (33) des Beleuchtungslichts (5), der durch eine Wand (11) des Probengefäßes (10) definiert ist, als erste und als zweite Blendeneinstellung solche Blendeneinstellungen zu ermitteln und einzustellen, bei denen die Blende (40) gleich große Anteile des eingegrenzten Querschnittsbereichs (33) abdeckt,
wobei ein Beschnitt des Beleuchtungslichts (5) auf den eingegrenzten Querschnittsbereich (33) in einem Querschnitt (31) quer zu einer optischen Achse (30) des Lichtmikroskops (100) durch die Wand (11) des Probengefäßes (10) entstehen kann.

15. Lichtmikroskop nach Anspruch 14,
**dadurch gekennzeichnet,**
**dass** das Lichtmikroskop zum Durchführen des Verfahrens nach einem der Ansprüche 1 bis 13 eingerichtet ist.

16. Lichtmikroskop nach Anspruch 14 oder 15,
**dadurch gekennzeichnet,**
**dass** ein Objektiv (50) zum Leiten von Beleuchtungslicht (5), das von der Probe (15) kommt, zu den Bildaufnahmemitteln vorhanden ist und
**dass** die Blende (40) in einer Ebene, die zu einer Aperturebene des Objektivs (50) konjugiert ist, angeordnet ist.

17. Lichtmikroskop nach einem der Ansprüche 14 bis 16,
**dadurch gekennzeichnet,**
**dass** die Blende (40) als Blendengruppe (40) mit mehreren Einzelblenden (46) ausgeführt ist und
**dass** die elektronischen Steuerungsmittel (60) dazu eingerichtet sind, für die verschiedenen Blendeneinstellungen jeweils eine andere Einzelblende (46) in den Strahlengang einzubringen.

18. Lichtmikroskop nach einem der Ansprüche 14 bis 17,
**dadurch gekennzeichnet,**
**dass** die Blende (40) im Spektralbereich des Beleuchtungslichts (5) lichtundurchlässig ist und in einem davon verschiedenen Spektralbereich lichtdurchlässig ist.

19. Lichtmikroskop nach einem der Ansprüche 14 bis 18,
**dadurch gekennzeichnet,**
**dass** die Blende (40) ein zweidimensionales Array (48) aus Flüssigkristallelementen umfasst, die zwischen Transparenz und Opazität schaltbar sind, und dass die elektronischen Steuerungsmittel (60) dazu eingerichtet sind, zum Einstellen der ersten und der zweiten Blendeneinstellung jeweils bestimmte Flüssigkristallelemente auf Opazität zu schalten.

20. Lichtmikroskop nach einem der Ansprüche 14 bis 19,
**dadurch gekennzeichnet,**
**dass** Positioniermittel (18) zum Verschieben der Probenhalterung vorhanden sind,
**dass** die elektronischen Steuerungsmittel (60) dazu eingerichtet sind, zur Untersuchung verschiedener Bereiche der Probe (15) im Probengefäß (10) mittels der Positioniermittel (18) unterschiedliche Positionen der Probenhalterung einzustellen,
**dass** die elektronischen Steuerungsmittel (60) dazu eingerichtet sind, für jede eingestellte Position der Probenhalterung eine erste und eine zweite Blendeneinstellung zu ermitteln und für jede eingestellte Position der Probenhalterung ein Kontrastbild zu erzeugen.

## Claims

1. Method for recording images with a light microscope (100),
wherein a specimen container (10) with a specimen (15) is arranged on a specimen holder of the light microscope,
wherein illuminating light (5) is guided onto the specimen (15), **characterised in that**
a diaphragm (40) for restricting the illuminating light (5) is brought into an optical path of the illuminating light (5),
a first diaphragm setting is carried out, in which the diaphragm (40) covers a first cross-sectional area portion (34) of the illuminating light (5),
a first image of the specimen (15) is recorded with the first diaphragm setting, a second diaphragm setting is carried out, in which the diaphragm (40) covers a second cross-sectional area portion (35) of the illuminating light (5) which is different from the first cross-sectional area portion (34),
a second image of the specimen (15) is recorded with the second diaphragm setting and
the first image and the second image are taken into calculation to create a contrast image,
for a limited cross-sectional region (33) of the illuminating light (5) which is defined by a wall (11) of the specimen container (10), those diaphragm settings are determined and set as a first and a second diaphragm setting, in which the diaphragm (40) covers equal sized portions of the limited cross-sectional region (33),
wherein the illuminating light (5) is restricted to the limited cross-sectional region (33) by the wall (11) of the specimen container (10), in a cross-section (31) transverse to an optical axis (30) of the light microscope (100).

2. Method according to claim 1,
**characterised in that**
the diaphragm (40) is brought into the optical path between the specimen (15) and image recording means (59).

3. Method according to claim 1,
**characterised** inthat
the diaphragm (40) is brought into the optical path between an illuminating light source (4) and the specimen (15).

4. Method according to one of the claims 1 to 3,
**characterised** inthat
a mid-point (37) of the limited cross-sectional region (33) of the illuminating light (5) is determined,
as a straight line of symmetry (38) a straight line extending through the mid-point (37) is determined, and
as a first and second diaphragm setting those diaphragm settings are set, in which the area covered by the diaphragm (40) in the first diaphragm setting and the area covered by the diaphragm (40) in the second diaphragm setting lie symmetrical to the straight line of symmetry (38).

5. Method according to claim 4,
**characterised** inthat
the diaphragm settings differ in a rotation angle of a diaphragm edge (41) of the diaphragm (40) around a rotation axis (81) and
as a straight line of symmetry (38) a straight line is fixed which cuts the mid-point (37) and the rotation axis (81).

6. Method according to claim 5,
**characterised** inthat
a position of the rotation axis (81) is determined in a calibration measurement.

7. Method according to claim 6,
**characterised in that**
at least two pupil images are recorded in the calibration measurement, wherein the diaphragm edge (41) is brought into different rotation angles around the rotation axis (81),
the position of the rotation axis (81) is determined from the orientations of the diaphragm edge (41) in the different pupil images.

8. Method according to one of the claims 1 to 3,
**characterised** inthat
as a straight line of symmetry (38), a connecting straight line from the optical axis (30) or from the rotation axis (81) to a closest lying wall region (12) of the specimen container (10) is determined,
wherein the closest lying wall region (12) is that part of the wall (11) of the specimen container (10) which is closest to the optical axis (30) or to the rotation axis (81), and
as first and second diaphragm settings, those settings are applied, in which the area covered by the diaphragm (40) in the first diaphragm position and the area covered by the diaphragm (40) in the second diaphragm position lie symmetrical to the straight line of symmetry (38).

9. Method according to one of the claims 4 to 8,
**characterised in that**
an overview image of the specimen (15) is recorded for the purpose of determination of the first and second diaphragm setting in an overview measurement,
the position of a wall (11) of the specimen container (10) is determined in the overview image by means of image processing means, and
the closest lying wall region (12) to the optical axis (30) is determined from the determined position of the wall (11) and / or the mid-point (37) of the limited cross-sectional region (33) is determined with the determined position of the wall (11).

10. Method according to one of the claims 1 to 9,
**characterised in that**
for the purpose of determination of the first and second diaphragm settings the diaphragm (40) is brought into the optical path of the illuminating light (5), the diaphragm (40) is rotated and in different rotation positions of the diaphragm (40) test images of the specimen (15) are recorded, a respective pair of test images, for which the associated rotation positions of the diaphragm (40) are rotated by 180° relative to each other, are set against each other having regard to an evaluation criterion, one of the pairs of test images is selected with the evaluation criterion and the associated two diaphragm settings are set as the first and second diaphragm settings.

11. Method according to one of the claims 1 to 10,
**characterised** inthat
the diaphragm (40) is rotated continuously,
a camera sensor of the light microscope (100) is exposed via multiple rotations of the diaphragm (40) for a first image recording,
a light pulse as illuminating light (5) is sent for the first image recording whenever the diaphragm (40) is at a first rotation position as a first diaphragm setting, and otherwise no illuminating light (5) is emitted,
the camera sensor of the light microscope (100) is exposed via multiple rotations of the diaphragm (40) for a second image recording,
a light pulse as illuminating light (5) is sent for the second image recording whenever the diaphragm (40) is at a second rotation position as a second diaphragm setting, and otherwise no illuminating light (5) is emitted,

12. Method according to one of the claims 1 to 11,
**characterised** inthat
the diaphragm (40) has a circle segment form, of which the circle segment opening has a tip which contacts the optical axis (30) of the light microscope (100),
the diaphragm (40) is rotated continuously,
as a first diaphragm setting the diaphragm (40) moves over a first rotation region and
as a second diaphragm setting the diaphragm (40) moves over a second rotation region.

13. Method according to claim 11 or 12,
**characterised in that**
a test image is recorded with the first and / or second diaphragm setting, an image brightness of the recorded test image or the recorded test images is determined,
an exposure time of a camera chip of the light microscope (100) is fixed with the determined image brightness so that a desired image brightness is achieved with the first and / or second diaphragm setting, and
the rotation speed of the diaphragm (40) is selected so that the time which the diaphragm (40) requires to move over the first and the second rotation region is respectively equal to the fixed exposure time.

14. Light microscope
with a specimen holder for holding a specimen container (10) with a specimen (15),
with optical means (20) for guiding illuminating light (5) onto the specimen (15),
**characterised in that**
with a diaphragm (40) which can be arranged for restricting the illuminating light (5) in an optical path of the illuminating light (5),
with electronic control means (60) for setting a first diaphragm setting, in which the diaphragm (40) covers a first cross-sectional area portion (34) of the illuminating light (5) and
with image recording means for recording a first image of the specimen (15) with the first diaphragm setting,
wherein the electronic control means (60) are adapted to set a second diaphragm setting, in which the diaphragm (40) covers a second cross-sectional area portion (35) of the illuminating light (5) which is different from the first cross-sectional area portion (34),
wherein with the image recording means a second image of the specimen (15) can be recorded with the second diaphragm setting and
wherein the electronic control means (60) are adapted to take into calculation the first image and the second image to create a contrast image,
the electronic control means (60) are adapted, for a limited cross-sectional region (33) of the illuminating light (5) which is defined through a wall (11) of the specimen container (10), to determine and set as first and second diaphragm settings those diaphragm settings, in which the diaphragm (40) covers equal sized portions of the limited cross-section region (33),
wherein restricting the illuminating light (5) to the limited cross-sectional region (33) in a cross-section (31) transversely to an optical axis (30) of the light microscope (100) can occur through the wall (11) of the specimen container (10).

15. Light microscope according to claim 14,
**characterised** inthat
the light microscope is adapted to carry out the method according to one of the claims 1 to 13.

16. Light microscope according to claim 14 or 15,
**characterised** inthat
an objective (50) for guiding illuminating light (5) coming from the specimen (15) to the image recording means is provided, and
the diaphragm (40) is arranged in a plane conjugated to an aperture plane of the objective (50).

17. Light microscope according to one of the claims 14 to 16,
**characterised** inthat
the diaphragm (40) is designed as a diaphragm group (40) with a plurality of single diaphragms (46) and
the electronic control means (60) are adapted to respectively bring another single diaphragm (46) into the optical path for the different diaphragm settings.

18. Light microscope according to one of the claims 14 to 17,
**characterised** inthat
the diaphragm (40) is light-impermeable in the spectral range of the illuminating light (5) and is light-permeable in a different spectral range from this.

19. Light microscope according to one of the claims 14 to 18,
**characterised in that**
the diaphragm (40) comprises a two-dimensional array (48) of liquid crystal elements which can be switched between transparency and opacity, and the electronic control means (60) are adapted, for the setting of the first and second diaphragm setting, to switch in each case certain liquid crystal elements to opacity.

20. Light microscope according to one of the claims 14 to 19,
**characterised in that**
positioning means (18) are present to displace the specimen holder,
the electronic control means (60) are adapted to set different positions of the specimen holder for the examination of different regions of the specimen (15) in the specimen container (10) by means of the positioning means (18), the electronic control means (60) are adapted to determine a first and a second diaphragm setting for each set position of the specimen holder and to produce a contrast image for each set position of the specimen holder.

## Revendications

1. Procédé pour la prise de vues avec un microscope optique (100),
selon lequel un récipient pour échantillon (10), avec un échantillon (15), est mis en place sur un support d'échantillon du microscope optique,
selon lequel une lumière d'éclairage (5) est dirigée sur l'échantillon (15), **caractérisé en ce que** :
un écran (40) est mis en place dans une trajectoire de rayonnement de la lumière d'éclairage (5) pour le fractionnement de la lumière d'éclairage (5),
un premier réglage d'écran est prévu, pour lequel l'écran (40) cache une première partie (34) de la surface de la section transversale de la lumière d'éclairage (5),
une première image de l'échantillon (15) est prise avec le premier réglage d'écran,
un deuxième réglage d'écran est prévu, pour lequel l'écran (40) cache une deuxième partie (35) de la surface de la section transversale de la lumière d'éclairage (5), qui est différente de la première partie de surface de section transversale (34),
une deuxième image de l'échantillon (15) est prise avec le deuxième réglage d'écran,
la première image et la deuxième image sont compensées l'une avec l'autre pour la construction d'une image de contraste,
lesdits réglages d'écran sont déterminés et mis en oeuvre pour une plage limitée (33) de la section transversale de la lumière d'éclairage (5), qui est définie par une paroi (11) du récipient pour échantillon (10), en constituant un premier et un deuxième réglage d'écran, pour lesquels l'écran (40) cache de manière identique des parts importantes de la plage limitée (33) de section transversale,
la lumière d'éclairage (5) étant, dans une section transversale (31), fractionnée transversalement à un axe optique (30) du microscope optique (100) par la paroi (11) du récipient pour échantillon (10) sur la plage limitée (33) de section transversale.

2. Procédé selon la revendication 1,
**caractérisé :**
**en ce que** l'écran (40) est mis en place entre l'échantillon (15) et des moyens de prise de vues (59), dans la trajectoire de rayonnement.

3. Procédé selon la revendication 1,
**caractérisé :**
**en ce que** l'écran (40) est mis en place entre une source de lumière d'éclairage (4) et l'échantillon (15), dans la trajectoire de rayonnement.

4. Procédé selon une des revendications 1 à 3,
**caractérisé :**
**en ce qu'**un point central (37) de la plage limitée (33) de section transversale de la lumière d'éclairage (5) est déterminé,
**en ce qu'**on fixe, comme droite de symétrie (38), une droite qui passe par le point central (37), et
**en ce que** lesdits réglages d'écran sont mis en oeuvre en tant que premier et deuxième réglages d'écran pour lesquels la surface qui est cachée par l'écran (40) dans le cas du premier réglage d'écran et la surface qui est cachée par l'écran (40) dans le cas du deuxième réglage d'écran sont disposées symétriquement par rapport à la droite de symétrie (38).

5. Procédé selon la revendication 4,
**caractérisé :**
**en ce que** les réglages d'écran se différencient par un angle de rotation d'un bord d'écran (41) de l'écran (40) autour d'un axe de rotation (81), et
**en ce qu'**on fixe, comme droite de symétrie (38), une droite qui coupe le point central (37) et l'axe de rotation (81).

6. Procédé selon la revendication 5,
**caractérisé :**
**en ce qu'**une position de l'axe de rotation (81) est déterminée dans une mesure d'étalonnage.

7. Procédé selon la revendication 6,
**caractérisé :**
**en ce que**, dans la mesure d'étalonnage, au moins deux images de la pupille sont prises, pour lesquelles le bord d'écran (41) est mis en place selon différents angles de rotation autour de l'axe de rotation (81),
**en ce que** la position de l'axe de rotation (81) est déterminée à partir des orientations du bord d'écran (41) dans les différentes images de la pupille.

8. Procédé selon une des revendications 1 à 3,
**caractérisé :**
**en ce que**, en tant que droite de symétrie (38), une droite de liaison est déterminée à partir de l'axe optique (30) ou à partir de l'axe de rotation (81) jusqu'à une plage de paroi (12) du récipient pour échantillon (10) qui est la plus proche,
la plage de paroi (12) la plus proche étant la partie de la paroi (11) du récipient pour échantillon (10) qui se trouve être le plus près de l'axe optique (30) ou de l'axe de rotation (81), et
**en ce que** lesdits réglages d'écran sont mis en oeuvre en tant que premier et deuxième réglages d'écran pour lesquels la surface qui est cachée par l'écran (40) dans le cas du premier réglage d'écran et la surface qui est cachée par l'écran (40) dans le cas du deuxième réglage d'écran sont disposées symétriquement par rapport à la droite de symétrie (38).

9. Procédé selon une des revendications 4 à 8,
**caractérisé :**
**en ce que**, pour la détermination des premier et deuxième réglages d'écran,
une image d'ensemble de l'échantillon (15) est prise dans une mesure d'ensemble,
**en ce que**, dans l'image d'ensemble, la position d'une paroi (11) du récipient pour échantillon (10) est déterminée à l'aide de moyens de traitement d'image, et
**en ce que**, à partir de la position de la paroi (11) déterminée, la plage de paroi (12) la plus proche de l'axe optique (30) est déterminée et/ou en ce que, avec la position de la paroi (11) déterminée, le point central (37) de la plage limitée (33) de section transversale est déterminé.

10. Procédé selon une des revendications 1 à 9,
**caractérisé :**
**en ce que**, pour la détermination des premier et deuxième réglages d'écran, l'écran (40) est mis en place dans la trajectoire de rayonnement de la lumière d'éclairage (5),
**en ce qu'**on fait tourner l'écran (40) et, pour différentes positions en rotation de l'écran (40), des images de test de l'échantillon (15) sont prises,
**en ce que** chaque paire des images de test pour lesquelles les positions correspondantes de l'écran (40) ont pivoté de 180° l'une par rapport à l'autre sont compensées l'une avec l'autre par rapport à un critère d'évaluation,
**en ce que**, à l'aide du critère d'évaluation, une des paires d'images de test est sélectionnée, et les deux réglages d'écran correspondants sont mis en oeuvre en tant que premier et deuxième réglages d'écran.

11. Procédé selon une des revendications 1 à 10,
**caractérisé :**
**en ce qu'**on fait tourner l'écran (40) de manière uniforme,
**en ce que**, pour une première prise de vue, un capteur de prise de vues du microscope optique (100) est exposé sur plusieurs tours de l'écran (40),
**en ce que**, pour la première prise de vues, une impulsion de lumière est envoyée en tant que lumière d'éclairage (5) chaque fois que l'écran (40) se trouve, en tant que premier réglage d'écran, dans une première position en rotation, et, sinon, aucune lumière d'éclairage (5) n'est émise,
**en ce que**, pour une deuxième prise de vue, le capteur de prise de vues du microscope optique (100) est exposé sur plusieurs tours de l'écran (40),
**en ce que**, pour la deuxième prise de vue, une impulsion de lumière est envoyée en tant que lumière d'éclairage (5) chaque fois que l'écran (40) se trouve, en tant que deuxième réglage d'écran, dans une deuxième position en rotation, et, sinon, aucune lumière d'éclairage (5) n'est émise.

12. Procédé selon une des revendications 1 à 11,
**caractérisé :**
**en ce que** l'écran (40) a une forme de secteur circulaire, dont l'ouverture de secteur circulaire comporte une pointe qui touche l'axe optique (30) du microscope optique (100),
**en ce qu'**on fait tourner l'écran (40) de manière uniforme,
**en ce que**, en tant que premier réglage d'écran, l'écran (40) cache une première plage angulaire, et
**en ce que**, en tant que deuxième réglage d'écran, l'écran (40) cache une deuxième plage angulaire.

13. Procédé selon la revendication 11 ou 12,
**caractérisé :**
**en ce qu'**avec le premier et/ou le deuxième réglage d'écran, une image de test est prise,
**en ce qu'**une luminosité de l'image de test prise, ou des images de test prises, est déterminée,
**en ce qu'**avec la luminosité déterminée, une durée d'exposition d'une puce de l'appareil de prise de vues du microscope optique (100) est fixée de telle manière qu'une luminosité souhaitée est atteinte avec le premier et/ou le deuxième réglage d'écran, et
**en ce que** la vitesse de rotation de l'écran (40) est choisie de telle manière que la durée qui est nécessaire pour que l'écran (40) assure le balayage de la première et de la deuxième plage angulaire est chaque fois de manière identique la durée d'exposition fixée.

14. Microscope optique,
avec un support d'échantillon pour la mise en place d'un récipient pour échantillon (10), avec un échantillon (15),
avec des moyens optiques (20) pour diriger une lumière d'éclairage (5) sur l'échantillon (15),
**caractérisé en ce qu'**il est aussi prévu :
avec un écran (40) qui peut être mis en place dans une trajectoire de rayonnement de la lumière d'éclairage (5) pour le fractionnement de la lumière d'éclairage (5),
avec des moyens électroniques de commande (60) pour la mise en oeuvre d'un premier réglage d'écran, selon lequel l'écran (40) cache une première partie (34) de la surface de la section transversale de la lumière d'éclairage (5), et
avec des moyens de prise de vues pour la prise d'une première image de l'échantillon (15) avec le premier réglage d'écran,
les moyens électroniques de commande (60) étant agencés pour la mise en oeuvre d'un deuxième réglage d'écran, selon lequel l'écran (40) cache une deuxième partie (35) de la surface de la section transversale de la lumière d'éclairage (5), qui est différente de la première partie de surface de section transversale (34),
une deuxième image de l'échantillon (15) pouvant être prise avec le deuxième réglage d'écran à l'aide des moyens de prise de vues, et
les moyens électroniques de commande (60) étant agencés de telle manière que la première image et la deuxième image sont compensées l'une avec l'autre pour la production d'une image de contraste,
les moyens électroniques de commande (60) étant également agencés de telle sorte que lesdits réglages d'écran sont déterminés et mis en oeuvre pour une plage de section transversale limitée (33) de la lumière d'éclairage (5), qui est définie par une paroi (11) du récipient pour échantillon (10), en tant que premier et deuxième réglages d'écran selon lesquels l'écran (40) cache de manière identique des parts importantes de la plage limitée (33) de section transversale,
une fraction de la lumière d'éclairage (5) pouvant être, sur la plage limitée (33) de section transversale, définie dans une section transversale (31), transversalement à un axe optique (30) du microscope optique (100), par la paroi (11) du récipient pour échantillon (10).

15. Microscope optique selon la revendication 14,
**caractérisé :**
**en ce que** le microscope optique est agencé pour la mise en oeuvre du procédé selon l'une des revendications 1 à 13.

16. Microscope optique selon la revendication 14 ou 15,
**caractérisé :**
**en ce qu'**une lentille (50) est présente pour diriger la lumière d'éclairage (5), qui vient de l'échantillon (15), vers les moyens de prise de vues, et
**en ce que** l'écran (40) est disposé dans un plan qui est conjugué par rapport à un plan d'ouverture de la lentille (50).

17. Microscope optique selon une des revendications 14 à 16, **caractérisé :**
**en ce que** l'écran (40) est réalisé sous la forme d'un groupe d'écrans (40) avec plusieurs écrans individuels (46), et
**en ce que** les moyens électroniques de commande (60) sont agencés de manière à mettre en place, pour les différents réglages d'écran, à chaque fois un écran individuel distinct (46).

18. Microscope optique selon une des revendications 14 à 17, **caractérisé :**
**en ce que** l'écran (40) est opaque à la lumière, dans la plage spectrale de la lumière d'éclairage (5), et est transparent à la lumière, dans une plage spectrale différente de cette dernière.

19. Microscope optique selon une des revendications 14 à 18, **caractérisé :**
**en ce que** l'écran (40) comprend un réseau bidimensionnel (48) d'éléments à cristaux liquides, qui peuvent être commutés entre la transparence et l'opacité, et
**en ce que** les moyens électroniques de commande (60) sont agencés de manière à permettre, pour la mise en oeuvre des premier et deuxième réglages d'écran, d'effectuer à chaque fois la commutation, vers l'opacité, d'éléments à cristaux liquides déterminés.

20. Microscope optique selon une des revendications 14 à 19, **caractérisé :**
**en ce que** des moyens de positionnement (18) sont présents pour la mise en place du support d'échantillon,
**en ce que** les moyens électroniques de commande (60) sont agencés pour régler à l'aide des moyens de positionnement (18) différentes positions du support d'échantillon, pour l'inspection de différentes régions de l'échantillon (15) dans le récipient pour échantillon (10),
**en ce que** les moyens électroniques de commande (60) sont agencés pour déterminer, pour chaque position réglée du support d'échantillon, un premier et un deuxième réglage d'écran et, pour chaque position réglée du support d'échantillon, produire une image de contraste.
